# EUROPEAN PATENT APPLICATION

(11) **EP 4 528 475 A1**
(43) Date of publication of application: **26.03.2025**
(21) Application number: 23876614.1
(22) Date of filing: 08.10.2023
(51) Int. Cl.: G06F 3/14

(54) **CROSS-SCREEN SHARING METHOD, GRAPHICAL INTERFACE, AND RELATED APPARATUS**

(30) Priority: 12.10.2022 CN 202211249885
(71) Applicant: Huawei Technologies Co., Ltd., Shenzhen, Guangdong 518129 (CN)
(72) Inventor: GAO, Hongliang, Shenzhen, Guangdong 518129 (CN); FU, Tianfu, Shenzhen, Guangdong 518129 (CN); LI, Meng, Shenzhen, Guangdong 518129 (CN); LV, Xin, Shenzhen, Guangdong 518129 (CN)
(74) Representative: Körber, Martin Hans
(86) International application number: PCT/CN2023/123376
(87) International publication number: WO 2024/078412

(57) **Abstract**

This application discloses a cross-screen sharing method, a graphical interface, and a related apparatus. The method relates to an electronic device including a plurality of displays. In the method, different accounts may be logged in to on different displays. When the electronic device detects that content on one display is shared to another display, the electronic device may determine, based on permission of accounts logged in to on the two displays, whether to perform sharing, or whether to query a user, and perform sharing with consent of the user. This prevents the electronic device from directly sharing content on one display to another display for display, thereby implementing permission-based management of content shared between different displays, and enhancing management and control of the electronic device on the content shared in a cross-screen manner.

## Description

This application claims priority to Chinese Patent Application No. 202211249885.X, filed with the China National Intellectual Property Administration on October 12, 2022 and entitled "CROSS-SCREEN SHARING METHOD, GRAPHICAL INTERFACE, AND RELATED APPARATUS", which is incorporated herein by reference in its entirety.

### TECHNICAL FIELD

This application relates to the field of terminals and communication technologies, and in particular, to a cross-screen sharing method, a graphical interface, and a related apparatus.

### BACKGROUND

With continuous development of computer technologies, increasingly more electronic products, such as mobile phones, tablets, computers, and other devices gradually enter people's life.

Currently, one device may be equipped with a plurality of displays, and the plurality of displays may perform display simultaneously, to improve device utilization. For example, when a conference is held, conference content may be displayed on a plurality of displays, so that participants at different locations can view the conference content on different displays. For another example, in a home scenario, content required by different family members may be displayed on different displays, to simultaneously meet entertainment requirements of the different family members. For another example, in an in-vehicle scenario, displays may be installed at different locations in a vehicle, to provide entertainment services for in-vehicle members in different seats.

### SUMMARY

This application provides a cross-screen sharing method, a graphical interface, and a related apparatus, to implement permission-based management of content shared between a plurality of displays of an electronic device.

According to a first aspect, this application provides a cross-screen sharing method, where the method is applied to an electronic device including a first display and a second display. The method includes: The electronic device logs in to a first account on the first display; the electronic device displays first content or indication information of the first content on the first display; the electronic device detects a first operation of sharing the first content to the second display, where a second account is logged in to on the second display; and when permission of the first account is higher than permission of the second account, the electronic device displays the first content or second content obtained based on the first content on the second display.

The method provided in the first aspect is implemented, so that the electronic device can log in to different accounts on different displays. When detecting that a user shares content displayed on one display to another display to perform a display operation, if permission of an account logged in to on the previous display is higher than permission of an account logged in to on the next display, the electronic device may share content displayed on the previous display to the next display, so that the electronic device can implement permission-based management and control on the content shared in a cross-screen manner, and management and control of the electronic device on the content shared in the cross-screen manner are enhanced.

With reference to the first aspect, in an implementation, when the permission of the first account is lower than or equal to the permission of the second account, the method further includes: The electronic device rejects to respond to the first operation; or the electronic device outputs first prompt information, where the first prompt information prompts a user to share the first content to the second display; and when receiving a second operation of agreeing to share, the electronic device displays, on the second display, the first content or the second content obtained based on the first content, or when receiving a third operation of rejecting to share, the electronic device rejects to respond to the first operation.

In other words, when the electronic device detects that the user shares content displayed on one display to another display for display, if permission of an account logged in to on the previous display is lower than permission of an account logged in to on the next display, cross-screen sharing of the electronic device fails; or the electronic device outputs the prompt information, and determines, based on a selection of the user, whether to perform cross-screen sharing.

In this way, the electronic device may determine, based on the permission of the accounts logged in to on the two displays during cross-screen sharing, whether to perform cross-screen content sharing, or whether user intervention is required, to determine whether to perform cross-screen content sharing. This enhances a sense of participation of the user in cross-screen sharing.

With reference to the first aspect, in an implementation, before the first operation of sharing the first content to the second display, no account is logged in to on the second display; and after the electronic device detects the first operation of sharing the first content to the second display, the method further includes: The electronic device automatically logs in to the second account on the second display; or when receiving a fourth operation, the electronic device logs in to the second account on the second display.

After the electronic device detects an operation of sharing display content on one display to another display for display, if no account is logged in to on the next display, the electronic device may automatically log in to an account on the display, or complete login of an account on the display under an operation of the user. In this way, it can be ensured that cross-screen sharing can be implemented on the display only when an account is logged in to, and convenience is provided for the user to implement cross-screen sharing.

With reference to the first aspect, in an implementation, the first operation includes a user operation performed on an option that is displayed on the first display and that indicates the second display.

In other words, when the user triggers cross-screen sharing, the user may determine a target display for cross-screen sharing by selecting an option that corresponds to the target display and that is displayed on the display.

With reference to the first aspect, in an implementation, the first account corresponds to a first storage space in the electronic device, the second account corresponds to a second storage space in the electronic device, and the first storage space and the second storage space are isolated from each other.

Different accounts correspond to different storage spaces, and the storage spaces are isolated from each other. In this way, content of the accounts is independent.

With reference to the first aspect, in an implementation, before the electronic device displays the first content or the second content on the second display, the first content is located in the first storage space, and before the electronic device displays, on the second display, the second content obtained based on the first content, the method further includes: The electronic device sends the first content to the second storage space.

That the electronic device implements cross-screen content sharing may be specifically implemented as sharing content in a storage space of an account logged in to on one display to a storage space of an account logged in to on another display. In this way, when displaying, on the next display, the content shared in the cross-screen manner, the electronic device may obtain the content from the storage space of the account logged in to on the next display, and display the content on the display.

With reference to the first aspect, in an implementation, the first content is provided by a first application; and that the electronic device displays the first content or the second content on the second display specifically includes: The electronic device displays, on the second display, the first content or the second content that are provided by a second application, where the second application and the first application are a same application or applications of a same type.

In other words, when sharing, in a cross-screen manner, content that is of an application and that is displayed on one display to another display, the electronic device may display, on the next display by using a same application or an application of a same type, the content shared in the cross-screen manner, to better display the content shared in the cross-screen manner. For example, it is assumed that the electronic device shares, to a display 2, a destination entered by the user on a display 1 in a navigation application, the electronic device may display, on the display 2, the destination or a navigation route to the destination by using a same navigation application or another navigation application that also provides a navigation function, so that the user can view same display effect on the display 2 as display effect of the destination on the display 1.

With reference to the first aspect, in an implementation, the first application is from the first account, and the second application is from the second account. Further, the first application is from the storage space of the first account, and the second application is from the storage space of the second account.

In other words, the first application and the second application may be independent applications, and application content displayed by the electronic device on the display may be from a storage space of an account logged in to on the display. In this way, each display is equivalent to an independent device, and a plurality of users may independently operate different displays simultaneously, so that utilization of the device including a plurality of displays is developed to a greater extent to meet use and entertainment needs of a plurality of users simultaneously.

With reference to the first aspect, in an implementation, the first application or the second application belongs to one or more of the following: an application involving privacy data, a third-party application, and an application that does not need to run for long time.

The first application or the second application belongs to the application involving privacy data. Because storage spaces of different accounts are isolated from each other, privacy data entered by the user when the user uses the application on the electronic device can be prevented from being stolen by another user. This ensures security of the privacy data.

The first application or the second application belongs to the third-party application. Because storage spaces of different accounts are isolated from each other, when operating the displays, different users may install required applications based on user requirements and preferences, and applications installed by the users on different displays do not affect each other.

The first application or the second application belongs to the application that does not need to run for long time. Because storage spaces of different accounts are isolated from each other, applications running under different accounts do not affect each other.

With reference to the first aspect, in an implementation, before that the electronic device displays, on the second display, the first content or the second content that are provided by a second application, the method further includes: The electronic device automatically installs the second application in the storage space of the second account; or when receiving a fifth operation, the electronic device installs the second application in the storage space of the second account.

In other words, when the electronic device shares display content on one display to another display, the electronic device may automatically install, in an account logged in to on the next display, an application used to display the display content or related content of the display content, or install, under an operation of the user in an account logged in to on the next display, an application used to display the display content or related content of the display content. This facilitates user operations and provides intelligent cross-screen sharing experience for the user.

With reference to the first aspect, in an implementation, the first content and the second content are located in a third storage space shared by the first account and the second account.

In other words, the content cross-screen shared by the electronic device may be located in a storage space shared by the plurality of accounts, and the electronic device may implement cross-screen sharing of the content shared by the plurality of accounts based on permission of the accounts.

With reference to the first aspect, in an implementation, both the first content and the second content are provided by a shared application installed in the third storage space.

With reference to the first aspect, in an implementation, the shared application belongs to any one or more of the following: an application that does not involve privacy data, a system application, and an application that needs to run for long time.

Because different accounts can access content in the shared storage space, and the first application or the second application belongs to the application that does not involve privacy data, there is no need to worry about whether data may be stolen by another user, causing privacy data leakage of the user. The first application or the second application belongs to the system application. This reduces troubles of presetting some necessary applications in an account by the user, and improves convenience of operating the electronic device by the user. The first application or the second application belongs to the application that runs for long time, so that in a multi-screen display scenario, simultaneously generated data of the application displayed on each display can be reduced. This reduces consumption of system resources, improves system operation efficiency, and improves device performance.

With reference to the first aspect, in an implementation, the first content includes one or more of the following: a text, an image, a video, an audio, a link, a file, and a table.

With reference to the first aspect, in an implementation, the electronic device includes one system-on-a-chip, and running of storage spaces corresponding to a plurality of accounts is supported by the system-on-a-chip.

The electronic device may be a "one-core multi-screen" device, display of all displays of the electronic device is driven by one system-on-a-chip, and all operation processing processes in the electronic device are supported by the system-on-a-chip.

With reference to the first aspect, in an implementation, the permission of the first account and the permission of the second account are automatically determined by the electronic device or determined based on an operation of the user.

With reference to the first aspect, in an implementation, the first account is an owner account, the second account is a guest account or an owner authorization account, and permission of the first account is higher than permission of the second account. Alternatively, the first account is an owner authorization account, the second account is a guest account, and permission of the first account is higher than permission of the second account. Alternatively, the first display is a central display screen, the second display is a front passenger screen or a rear seat screen, and permission of the first account logged in to on the first display is higher than permission of the second account logged in to on the second display.

According to a second aspect, an embodiment of this application provides an electronic device, including a plurality of displays, a memory, one or more processors, and one or more programs. When the one or more processors execute the one or more programs, the electronic device is enabled to perform the method described in the first aspect or any one of the implementations of the first aspect.

According to a third aspect, an embodiment of this application provides a computer-readable storage medium, including instructions. When the instructions are run on an electronic device, the electronic device is enabled to perform the method described in the first aspect or any one of the implementations of the first aspect.

According to a fourth aspect, an embodiment of this application provides a computer program product. When the computer program product runs on a computer, the computer is enabled to perform the method described in the first aspect or any one of the implementations of the first aspect.

### BRIEF DESCRIPTION OF DRAWINGS

FIG. 1 is a diagram of an in-vehicle layout of a plurality of displays of an in-vehicle device according to an embodiment of this application;
FIG. 2 is a diagram of an indoor layout of a plurality of displays in a home scenario according to an embodiment of this application;
FIG. 3A is a diagram of a hardware structure of an electronic device 100 according to an embodiment of this application;
FIG. 3B is a diagram of a software structure of an electronic device 100 according to an embodiment of this application;
FIG. 4 is a flowchart of internal interaction involved when an electronic device 100 performs cross-screen sharing according to an embodiment of this application;
FIG. 5A and FIG. 5B are another flowchart of internal interaction involved when an electronic device 100 performs cross-screen sharing according to an embodiment of this application;
FIG. 6A to FIG. 6G and FIG. 7A to FIG. 7E are some user interfaces according to an embodiment of this application; and
FIG. 8 is a flowchart of a cross-screen sharing method according to an embodiment of this application.

### DESCRIPTION OF EMBODIMENTS

Technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language, for example, Java or an extensible markup language (extensible markup language, XML). Interface source code is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of the electronic device.

An embodiment of this application provides a cross-screen sharing method. The method is applied to an electronic device including a plurality of displays. In the method, the electronic device may log in to different accounts on different displays, access storage spaces corresponding to the accounts, and display, on the displays, content in the storage spaces corresponding to the accounts logged in to on the displays. The electronic device may log in to an account 1 on a display 1, and log in to an account 2 on a display 2. Different accounts have different permission. When the electronic device detects an operation of sharing, by a user, content on the display 1 to the display 2 for display, the electronic device may determine, based on permission of the account 1 and the account 2, whether the account 2 receives the content, and displays the content on the display 2.

When the permission of the account 1 is higher than the permission of the account 2, the electronic device may directly share the content to the display 2 for display. When the permission of the account 1 is equal to or lower than the permission of the account 2, after receiving an operation performed on the display 2 for agreeing to display the content, the electronic device may share the content to the display 2 for display, or the electronic device rejects to display the content on the display 2. For specific descriptions of the permission of the account, refer to a subsequent method procedure. Details are not described herein.

It can be learned that the electronic device can display different content on different displays based on the accounts, and the display content on the displays is independent. In this way, each display is equivalent to an independent device, and a plurality of users may independently operate the displays simultaneously, so that utilization of the device including a plurality of displays is developed to a greater extent, to meet use and entertainment needs of the plurality of users simultaneously. In addition, the electronic device may implement cross-screen content sharing, which further enhances association and interaction between different displays, so that users who operate different displays can perform communication and exchange based on the displays. In addition, cross-screen content sharing on the electronic device may be performed based on permission of accounts logged in to on different displays, to determine how to perform cross-screen display, so that the electronic device can implement cross-screen content sharing only when a specified condition is met. This prevents the electronic device from directly sharing content on one display to another display for display, thereby implementing permission-based management of content shared between different displays, and enhancing management and control of the electronic device on the content shared in the cross-screen manner.

The following describes several application scenarios provided in embodiments of this application.

### Scenario 1: In-vehicle scenario

In an in-vehicle scenario, the electronic device including a plurality of displays may be an in-vehicle device in a vehicle, and the in-vehicle device may include a plurality of displays, such as a central display screen, a front passenger screen, a rear seat screen, and a head-up display. In addition, the in-vehicle device may further include an intelligent cockpit processor, and the intelligent cockpit processor is configured to: control and manage display of the plurality of displays. For example, the intelligent cockpit processor may be located inside the central display screen.

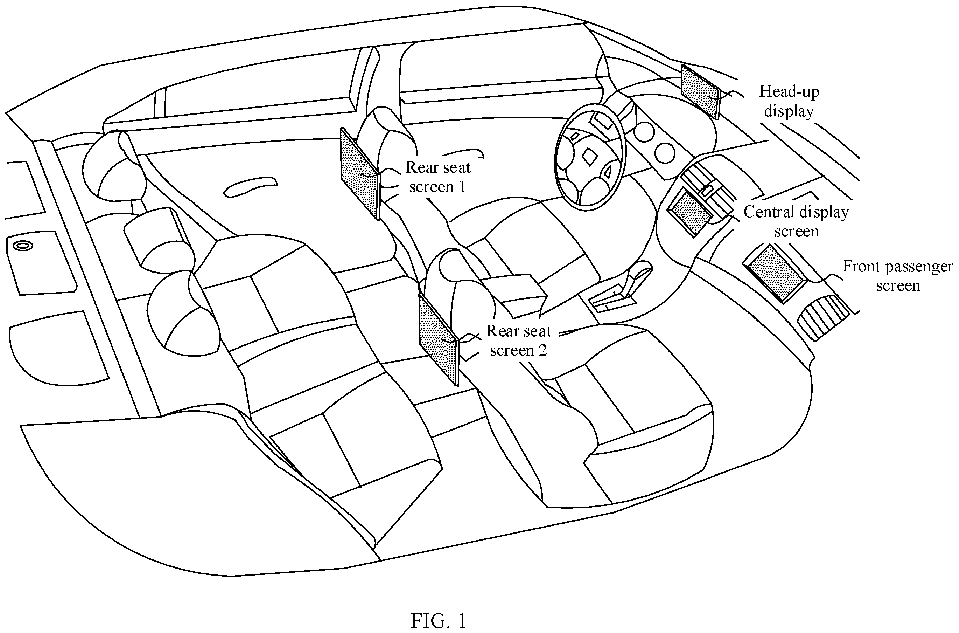

FIG. 1 is a diagram of an in-vehicle layout of a plurality of displays of an in-vehicle device according to an embodiment of this application.

As shown in FIG. 1, the in-vehicle device may include a plurality of displays: a central display screen, a front passenger screen, a head-up display, a rear seat screen 1, and a rear seat screen 2. The central display screen may be located in the middle of a workbench facing front driver seats, and may be configured to: display a vehicle reversing image and a navigation interface, and provide entertainment services such as watching a drama and listening to music. The head-up display may be located in front of a workbench facing a driver seat, and may be configured to display important traveling information such as a vehicle speed, an engine rotational speed, a remaining fuel quantity, navigation, and the like. The front passenger screen may be located in front of a workbench facing a front passenger seat, and is configured to provide entertainment services for a front passenger. The rear seat screen 1 and the rear seat screen 2 may be located in front of rear seats, for example, mounted behind headrests of the front driver seats shown in FIG. 1, to provide entertainment services for rear seat passengers.

With reference to the in-vehicle device shown in FIG. 1, in the in-vehicle scenario, a user may log in to different accounts on the displays of the in-vehicle device, the displays may perform independent display based on the accounts, and content displayed on the displays is independent. Further, the in-vehicle device may detect an operation of sharing, by the user, content on one display to another display for display, and determine, by comparing permission of accounts logged in to on the two displays, whether to directly share the content to the another display for display.

For example, it is assumed that permission of an account logged in to on the central display screen is higher than permission of an account logged in to on the rear seat screen 1. The rear seat screen 1 may be configured to display content of a navigation application, and the in-vehicle device may send a location A entered by a passenger on the rear seat screen 1 to the central display screen for display. After the in-vehicle device detects an operation of agreeing, by a driver, to receive the location A, the central display screen may directly display a traveling route, provided by the navigation application, from a current location to the location A. In this way, in a process of taking a taxi, a trouble of querying a passenger about a destination by the driver is avoided, and distraction of querying about a navigation route by the driver in a driving process is also avoided. This improves safety in a vehicle traveling process. Then, after the vehicle travels to the destination, the driver may send, to the rear seat screen 1 by using the central display screen, a payment code that includes a fare amount, and the rear seat screen 1 may directly display the payment code, so that the passenger can quickly pay the fare. This provides a convenient electronic payment channel for the passenger.

It can be learned that different permission is set for different displays included in the in-vehicle device, so that when the in-vehicle device needs to transfer data between different displays, the in-vehicle device can determine, based on the permission, whether to transfer data, or how to implement data transfer. This enhances management and control on the cross-screen shared data by the in-vehicle device, and improves user experience on a plurality of displays in the in-vehicle scenario.

### Scenario 2: Home scenario

In a home scenario, the electronic device including a plurality of displays may be an indoor smart home device, and the smart home device may include a plurality of displays such as a living room screen, a bedroom screen, and a learning screen. In addition, the smart home device may further include a processor, and the processor is configured to: control and manage display of the plurality of displays.

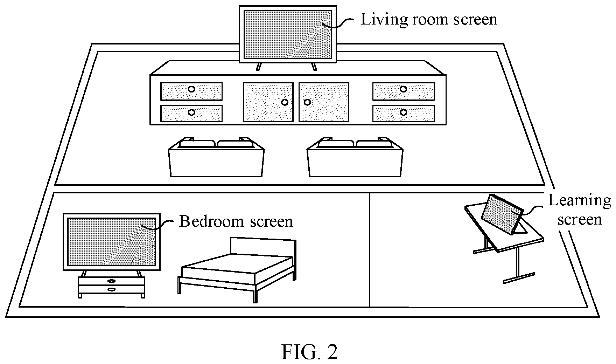

FIG. 2 is a diagram of an indoor layout of a plurality of displays in a home scenario according to an embodiment of this application.

As shown in FIG. 2, the smart home device may include a plurality of displays: a living room screen, a bedroom screen, and a learning screen. The living room screen may be located in a living room, and is configured to provide an entertainment service for a family member in the living room. The bedroom screen may be located in a bedroom, and is configured to provide an entertainment service for a family member in the bedroom. The learning screen may be located in a study, and is configured to provide a learning service such as listening to lectures and reviewing for a family member in the study.

With reference to the smart home device shown in FIG. 2, in the home scenario, a user may log in to different accounts on the displays of the smart home device, the displays may perform independent display based on the accounts, and content displayed on the displays is independent. Further, the smart home device may detect an operation of sharing, by the user, content on one display to another display for display, and determine, by comparing permission of the two displays, whether to directly share the content to the another display for display.

For example, it is assumed that permission of an account logged in to on the living room screen is higher than permission of an account logged in to on the learning screen. The living room screen may be configured to display content of a schedule application. A parent may set, on the living room screen, a schedule activity of a child by using the schedule application, and send the schedule activity to the account logged in to on the learning screen. The child may view the schedule activity on the learning screen. In addition, after completing online learning by using the learning screen, the child may send, by using the learning screen, a completed assignment to the account logged in to on the living room screen. In this case, the living room screen may display prompt information about whether to view the assignment, and the parent may determine, based on a will of the parent, whether to view the assignment currently.

It can be learned that different permission is set for different displays included in the smart home device, so that when the smart home device needs to transfer data between different displays, the smart home device can determine, based on the permission, whether to transfer data, or how to implement data transfer. This enhances management and control on the cross-screen shared data by the smart home device, and improves user experience on a plurality of displays in the home scenario.

It should be noted that the plurality of displays included in the electronic device may be connected to a main body of the electronic device by using a wired connection or a wireless connection. The wireless connection may be a short-distance connection like a Wi-Fi connection, a Bluetooth connection, an infrared connection, an NFC connection, or a ZigBee connection; or may be a long-distance connection. The long-distance connection includes but is not limited to a long-distance connection of a mobile network based on 2G, 3G, 4G, 5G, and a subsequent standard protocol. In addition, the plurality of displays may be displays that can only implement a display function, or may be other electronic devices that have an independent operation function but provide a display function as displays. This is not limited in embodiments of this application.

It should be understood that an application scenario of the cross-screen sharing method is not limited in embodiments of this application. For example, the application scenario may further include a conference scenario, an exhibition scenario, a surveillance scenario, and the like. In these application scenarios, the electronic device may include a plurality of displays, and different displays may have different permission. When performing cross-screen content sharing, the electronic device may determine, based on the permission, whether to implement cross-screen content display.

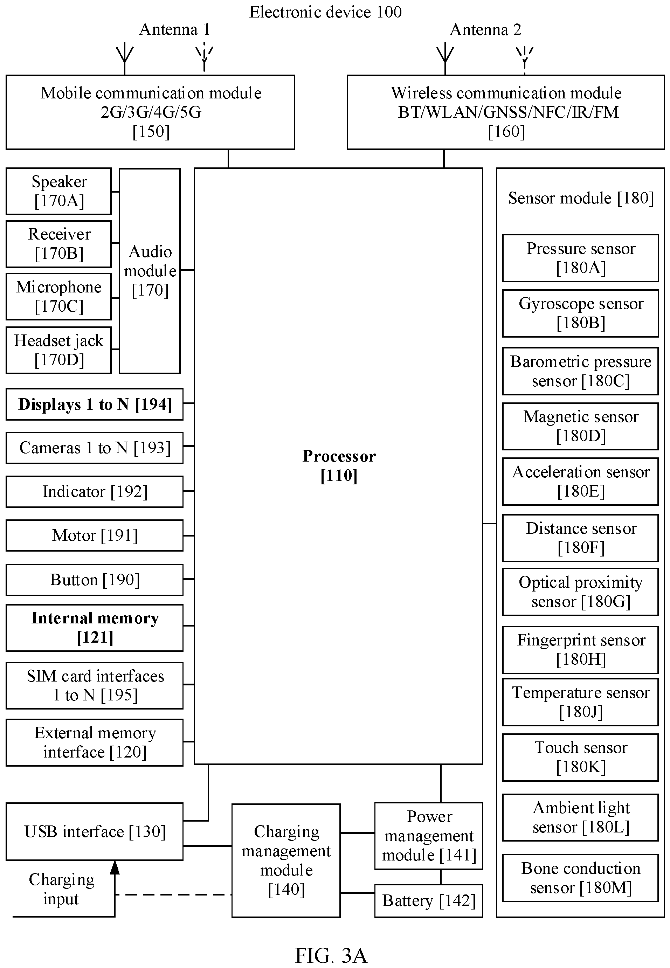

FIG. 3A is a diagram of a hardware structure of the electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device is not limited in embodiments of this application. For example, the electronic device 100 may be a device that includes only one system-on-a-chip and an operating system, and is equipped with a plurality of displays.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

For example, the electronic device 100 may be a device that includes only one system-on-a-chip and an operating system, and is equipped with a plurality of displays. The system-on-a-chip may integrate a plurality of key components of the electronic device 100, for example, the processor 110, the external memory interface 120, and the internal memory 121. The electronic device 100 may drive a plurality of displays by using the system-on-a-chip, to support running of storage spaces of a plurality of accounts.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments, the processor 110 may be configured to: control and manage a plurality of accounts in the electronic device 100, obtain content in storage spaces corresponding to the accounts, and determine, based on permission of accounts used to log in to on two displays, whether to send content in one account to another account.

The controller may generate an operation control signal based on instruction operation code and a time sequence signal, to complete control of instruction fetching and instruction execution.

A memory may be further disposed in the processor 110, and is configured to store instructions and data.

The charging management module 140 is configured to receive a charging input from a charger.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance).

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video on the display 194.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like.

In some embodiments, the electronic device may include N displays 194, and N is a positive integer greater than 1. For example, when the electronic device 100 is an in-vehicle device, the displays 194 may include a central display screen, a front passenger screen, a rear seat screen, a head-up screen, and the like. The display 194 may be configured to display a login interface of an account, display content provided by an application, and the like. For specific content displayed on the display 194, refer to a user interface mentioned subsequently. Details are not described herein.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise and brightness of the image. The ISP may further optimize parameters such as exposure and a color temperature of a photographing scenario.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, and N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning.

The internal memory 121 may include one or more random access memories (random access memory, RAM) and one or more nonvolatile memories (nonvolatile memory, NVM).

In some embodiments, the internal memory 121 may provide independent storage spaces for accounts, and different storage spaces are separately used to store data of applications installed in different accounts and data generated during application running.

The external memory interface 120 may be configured to connect to an external nonvolatile memory, to extend a storage capability of the electronic device 100. The external nonvolatile memory communicates with the processor 110 through the external memory interface 120, to implement a data storage function. For example, files such as music and a video are stored in the external nonvolatile memory.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100.

The headset jack 170D is configured to connect to a wired headset.

The pressure sensor 180A is configured to sense a pressure signal, and can convert the pressure signal into an electrical signal.

The gyroscope sensor 180B may be configured to determine a moving posture of the electronic device 100.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover leather case by using the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photoelectric diode. The light-emitting diode may be an infrared light-emitting diode. The electronic device 100 emits infrared light by using the light-emitting diode. The electronic device 100 detects infrared reflected light from a nearby object through the photoelectric diode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event.

The bone conduction sensor 180M may obtain a vibration signal.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

The electronic device may be a portable terminal device carrying iOS, Android, Microsoft, or another operating system, for example, a mobile phone, a tablet computer, or a wearable device; or may be a non-portable terminal device like a laptop (Laptop) having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In embodiments of this application, a mobile operating system with a layered architecture is used as an example to describe a software structure of the electronic device 100.

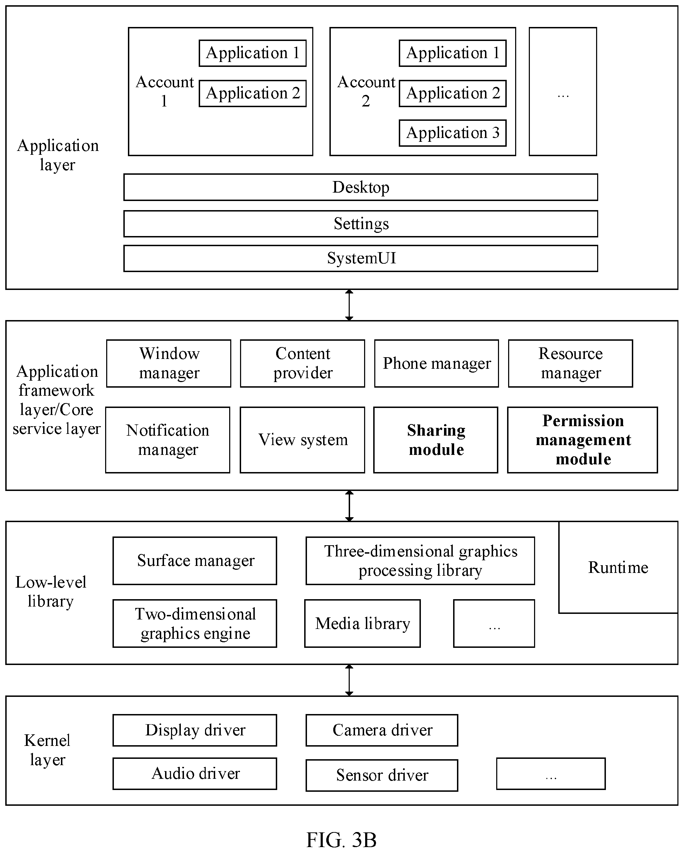

FIG. 3B is a diagram of a software structure of the electronic device 100 according to an embodiment of this application.

In a layered architecture, software is divided into several layers, and each layer has a clear role and task. The layers communicate with each other through a software interface. In some embodiments, a mobile operating system is divided into four layers: an application layer, an application framework layer/core service layer, a low-level library, and a kernel layer from top to bottom.

The application layer may include a series of application packages.

Because the electronic device 100 may include a plurality of accounts, the application layer may obtain, through division based on the accounts, application packages included in different accounts. The application packages included in different accounts do not affect each other. Different accounts may include different application packages, or may include a same application package. The application packages of different accounts are installed in storage spaces of accounts corresponding to the application packages. In addition, optionally, the application layer may further include an application package shared by the accounts, and the shared application package may be installed in a storage space shared by the accounts.

For ease of description, in the following embodiments of this application, applications included in different accounts are referred to as independent applications, and an application shared by the accounts are referred to as a shared application. For specific descriptions of the independent application and the shared application, refer to subsequent content. Details are not described herein.

As shown in FIG. 3B, the application package may include applications such as Desktop, Settings, SystemUI, an application 1, an application 2, and an application 3. Desktop, Settings, and SystemUI are shared applications. SystemUI is a system-level APK application, and may provide display content such as a status bar, a notification bar, a recent task interface, and a navigation bar. The application 1, the application 2, and the application 3 are independent applications. The electronic device 100 includes an account 1 and an account 2. Independent applications installed in the account 1 include the application 1 and the application 2, and independent applications installed in the account 2 include the application 1, the application 2, and the application 3.

In other words, when the electronic device 100 logs in to the account 1 on a display, content of the application 1, the application 2, Desktop, Settings, and SystemUI may be displayed on the display. The content of the application 1 and the application 2 is from a storage space of the account 1, and the content of Desktop, the Settings, and SystemUI is from a storage space shared by accounts in the electronic device 100. When the electronic device 100 logs in to the account 2 on a display, content of the application 1, the application 2, the application 3, Desktop, Settings, and SystemUI may be displayed on the display. The content of the application 1, the application 2, and the application 3 is from a storage space of the account 2, and the content of Desktop, Settings, and SystemUI is from the storage space shared by the accounts in the electronic device 100.

In some implementations, some applications in the account may be displayed only on a specified display. The specified display may be a display preset by the electronic device 100, or may be a display set by the user, or may be a display with optimal performance in the electronic device 100, or the like. A definition of the specified display is not limited in embodiments of this application. The application in the account 1 shown in FIG. 3B is used as an example. The application 1 may be displayed only on a display 1. In this case, when the electronic device 100 logs in to the account 1 on the display 1, the display 1 may display the content of the application 1. When the electronic device 100 logs in to the account 1 on a display 2, the display 1 cannot display the content of the application 1. For example, when the electronic device 100 is an in-vehicle device, the display 1 is a central display screen, and the application 1 is AppGallery. In this case, in all displays of the electronic device 100, AppGallery can be displayed only on the central display screen, to provide functions of installing and uninstalling an application for the user.

It should be understood that the shared application in the electronic device 100 is not limited to Desktop, Settings, and SystemUI shown in FIG. 3B. For example, the shared application may include only Desktop and SystemUI, or the shared application may further include Messages, Gallery, Calendar, Navigation, Clock, Maps, and the like. The shared application included in the electronic device 100 is not limited in embodiments of this application. In addition, the electronic device 100 may further include more or fewer accounts. In embodiments of this application, a quantity of accounts in the electronic device 100 is not limited, and applications included in the accounts are not limited. For example, the account 1 may include applications such as the application 1, the application 2, and the application 3, and the account 2 may include applications such as an application 4, an application 5, and an application 6. These applications may be applications installed by the electronic device 100 from AppGallery, or may be applications downloaded by the electronic device 100 by using a web page, or may be built-in applications of the electronic device 100 before delivery. Sources of these applications are not limited in embodiments of this application.

The application framework layer provides an application programming interface (application programming interface, API) and a programming framework for applications at the application layer. The application framework layer includes some predefined functions.

As shown in FIG. 3B, the application framework layer may include a window manager, a content provider, a phone manager, a resource manager, a notification manager, a view system, a sharing module, a permission management module, and the like.

The sharing module is configured to: when the electronic device 100 needs to share application content displayed on a display to a target display for display, determine whether a sharing condition is currently met. The sharing condition includes one or more of the following: an account is already logged in to on the target display, the application is installed on the account logged in to on the target display, and the like. For specific descriptions of the sharing condition, refer to a subsequent method procedure. Details are not described herein.

The permission management module is configured to: manage permission of accounts included in the electronic device 100, and when the electronic device 100 needs to share application content on one display to another display, compare permission of accounts logged in to on the two displays. For specific descriptions of sharing the application content by the electronic device 100 based on the permission, refer to a subsequent method procedure. Details are not described herein.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history, a bookmark, an address book, and the like.

The view system includes visual controls like a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of graph or scroll bar text, for example, a notification of an application that is run in the background, or may be a notification that appears on a screen in a form of dialog window. For example, text information is displayed in the status bar, an alert tone is given, the electronic device vibrates, or an indicator light blinks.

The Android runtime includes a kernel library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, a camera driver is started by invoking the kernel layer, and a static image or a video is captured through the camera 193.

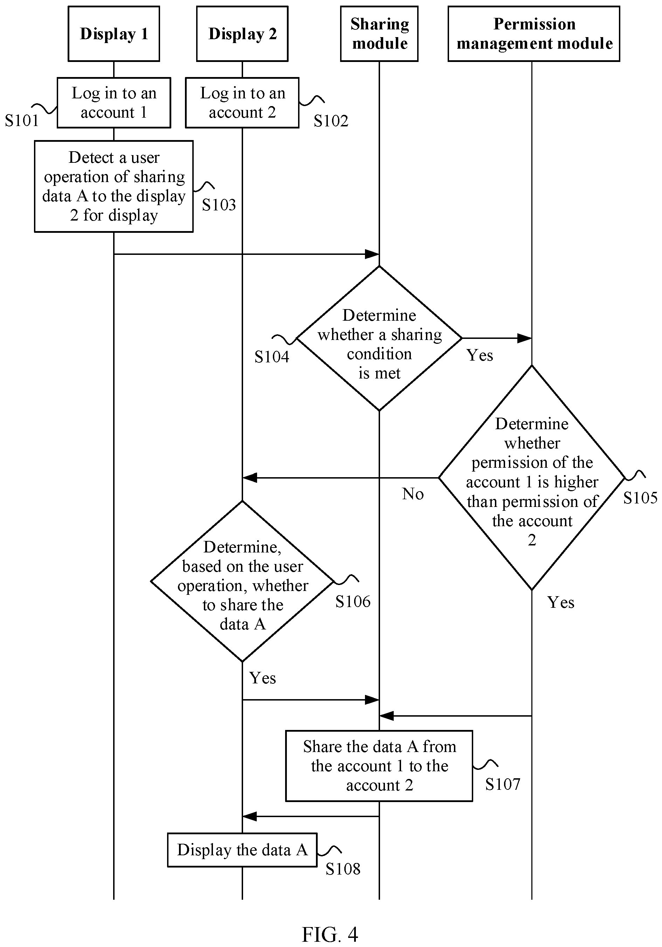

FIG. 4 is a flowchart of internal interaction involved when the electronic device 100 performs cross-screen sharing.

As shown in FIG. 4, a cross-screen sharing method provided in this embodiment of this application relates to a display 1, a display 2, a sharing module, and a permission management module in the electronic device 100. The display 1 and the display 2 may be any two displays in the electronic device 100. For specific descriptions of the sharing module and the permission management module, refer to related content in FIG. 3B. Details are not described herein.

S101: The electronic device 100 logs in to an account 1 on the display 1.

The account 1 may be an account registered in the electronic device 100.

For example, that the electronic device 100 registers the account may include the following steps:

### (1) Obtain registration information of the account.

The electronic device 100 may display an account registration interface on a display, and obtain the registration information that is of the account and that is entered by a user on the registration interface. The registration information may include an account, a password, a nickname, and the like. Further, the registration information may further include permission of the account. When the electronic device 100 performs cross-screen content sharing, the electronic device 100 may determine, based on the permission, whether to perform cross-screen sharing or how to perform cross-screen sharing.

It should be understood that the registration information is not limited in embodiments of this application.

### (2) Send the registration information to a server.

The server is configured to: obtain the registration information of the account, and determine, based on the registration information, whether the account already exists. If the account does not exist, the server locally stores the registration information of the account, so that when the electronic device 100 logs in to the account, the electronic device 100 determines, based on the registration information, whether the account logged in to by the electronic device 100 is valid. If the account exists, the account fails to be registered.

### (3) Obtain indication information returned by the server.

If the server determines that the account is successfully registered, the indication information returned by the server indicates that the account is successfully registered; otherwise, the indication information indicates that the account fails to be registered.

It should be noted that, when registering the account, the electronic device 100 not only sends the registration information to the server, but also may directly store the registration information locally. Alternatively, an account registration process of the electronic device 100 does not involve a server, and the electronic device 100 determines, based on stored registration information, whether the account already exists. If the account does not exist, the electronic device 100 locally stores the registration information. Otherwise, the account fails to be registered.

In addition, after the account is successfully registered, the electronic device 100 may locally divide a storage space for the account. The storage space is used to store data of applications installed in the account, for example, an installation file of the application or data generated in a running process of the application. It should be noted that, when the account is registered, some initial information may be pre-stored in the storage space, for example, data and initial configuration information of an initial application preset in the account.

In other words, when the electronic device 100 registers the account 1, the electronic device 100 may obtain registration information of the account 1, and send the registration information of the account 1 to the server. After obtaining indication information that indicates registration success and that is returned by the server, the electronic device 100 divides a storage space for the account 1 from a storage space, to complete registration of the account 1.

In some implementations, the account 1 may alternatively be an account registered by another device. For a specific step of registering the account by the another device, refer to the step of registering the account by the electronic device 100. Details are not described herein.

That the electronic device 100 logs in to the account 1 on the display 1 may include the following two cases:
(1) The electronic device 100 automatically logs in to the account 1 on the display 1.
   For example, the electronic device 100 may automatically log in to the account 1 on the display 1 after being powered on, or the electronic device 100 may automatically log in to the account 1 on the display 1 after the display 1 is turned on.
(2) The electronic device 100 logs in to the account 1 on the display 1 based on a user operation.

For example, the electronic device 100 may display a login interface of the account on the display 1. After detecting, on the login interface, a user operation of confirming login to the account 1, the electronic device 100 may log in to the account 1 on the display 1. The user operation may include one or more of the following: an account entering operation, a password entering operation, and an operation performed on a login control. The user operation may be represented as a touch operation performed on the display 1, a click operation performed on a mouse connected to the electronic device 100, or the like. A representation form of the user operation is not limited in embodiments of this application.

For example, that the electronic device 100 logs in to the account may include the following steps:
(1) Obtain login information of the account.
   The login information may include information such as an account, a password, login time, and a login location. This is not limited in embodiments of this application.
(2) Authenticate the account based on the login information of the account.

Account authentication may include server authentication and local authentication.

The server authentication means that the electronic device 100 sends the login information of the account to the server, and the server performs account authentication based on the login information and all stored registration information. For example, if the account is a registered account and is not logged in to, the account is successfully authenticated, and the server records the login information of the account; otherwise, the account fails to be authenticated, and then the server returns, to the electronic device 100, indication information indicating whether the account is successfully authenticated.

Local authentication means that the electronic device 100 performs account authentication based on the login information of the account and all locally stored registration information. For example, if the account is a registered account and is not logged in to, the account is successfully authenticated; otherwise, the account fails to be authenticated.

(3) After the authentication succeeds, content of the account is displayed.

After the authentication succeeds, the electronic device 100 displays the content of the account on the display on which the current account is logged in to. The content may include a user interface provided by each application. For example, it is assumed that an application 1 and an application 2 are installed in the account 1, after the electronic device 100 logs in to the account 1 on the display 1, the electronic device 100 may display application content of the application 1 and the application 2 on the display 1.

In other words, that the electronic device 100 logs in to the account 1 on the display 1 may include: The electronic device 100 obtains login information of the account 1, performs authentication on the account based on the login information, and displays content of the account 1 on the display 1 after the authentication succeeds.

S102: The electronic device 100 logs in to the account 2 on the display 2.

Similar to the description in step S101, the account 2 may be an account locally registered by the electronic device 100, or may be an account registered by another device. That the electronic device 100 logs in to the account 2 on the display 2 may include: The electronic device 100 obtains login information of the account 2, performs authentication on the account based on the login information, and displays content of the account 2 on the display 2 after the authentication succeeds. For specific descriptions of step S102, refer to related content in step S101. Details are not described herein.

It should be understood that the display 1 and the display 2 mentioned in embodiments of this application merely indicate that the display 1 and the display 2 are two different displays of the electronic device 100, and do not constitute a limitation on embodiments of this application. Similarly, the account 1 and the account 2 provided in embodiments of this application merely indicate that the account 1 and the account 2 are two different accounts of the electronic device 100, and do not constitute a limitation on embodiments of this application. Details are not described below.

S103: The electronic device 100 detects, on the display 1, a user operation of sharing data A to the display 2 for display.

For example, the data A may be from a storage space of the account 1, and the data A may be data in a form of text, image, table, video, audio, document, link, or the like. A presentation form of the data A is not limited in embodiments of this application.

The data A may be data provided by an application A. Specifically, the data A may be data that is entered by the user to enable a function provided by the application A when the electronic device 100 displays the application A on the display 1, or the data A may be data of the application A when the electronic device 100 displays the application A on the display 1. For example, the application A may be a navigation application, and the data A may be a destination location entered by the user. For another example, the application A may be a video playback application, and the data A may be a video played by the video playback application.

It should be understood that, in addition to the operation of sharing the data A from the display 1 to the display 2, the user operation may also be an operation of sharing the data A from one account to another account. In this case, step S103 may be that the electronic device 100 detects a user operation of sharing the data A from an account (namely, the account 1) logged in to on the display 1 to another account (for example, the account 2). This is not limited in embodiments of this application.

It should be understood that the data A may alternatively be from a storage space shared by all accounts in the electronic device 100. This is not limited in embodiments of this application.

S104: The electronic device 100 determines, by using the sharing module, whether a sharing condition is met.

The sharing condition may include one or more of the following: The electronic device 100 has logged in to an account on the display 2, an application used to display the data A is installed in the account logged in to on the display 2, and the like.

When the electronic device 100 determines that the sharing condition is met, the electronic device 100 performs step S105; otherwise, cross-screen sharing of the data A fails.

S105: The electronic device 100 determines, by using the permission management module, whether permission of the account 1 is higher than permission of the account 2.

For example, when the permission of the account 1 is higher than the permission of the account 2, the electronic device 100 may directly share the data A from the account 1 to the account 2, that is, perform step S107. Otherwise, the electronic device 100 rejects to share the data A, or the electronic device 100 determines, based on a user operation, whether to share the data A, that is, perform step S106.

S106: The electronic device 100 determines, based on the user operation performed on the display 2, whether to share the data A.

In other words, when the permission of the account 1 is equal to or lower than the permission of the account 2, the electronic device 100 may output prompt information on the display 2, to prompt the user whether to agree to share the data A to the account 2.

In this way, when the electronic device 100 shares data from a display with low permission to a target display with high permission or same permission for display, the electronic device 100 can display the data on the display with high permission only after obtaining consent of a user that controls the target display.

When the electronic device 100 determines, based on the user operation, to share the data A, the electronic device 100 performs step S107; otherwise, cross-screen sharing of the data A fails.

S107: The electronic device 100 shares the data A from the account 1 to the account 2 by using the sharing module.

Specifically, the electronic device 100 sends the data A to a storage space of the account 2, so that the electronic device 100 can display, on the display 2, the data A from the storage space of the account 2.

It should be understood that step S107 is an optional step, because when the data A is content in the storage space shared by all accounts in the electronic device 100, the electronic device 100 does not need to share the data A from the account 1 to the account 2, any account in the electronic device 100 can access the data A, and the data A is displayed on a display on which the account is logged in to.

S108: The electronic device displays the data A on the display 2.

For example, when the data A is a video, the electronic device 100 may play the video on the display 2. In this way, the electronic device 100 shares the video from the display 1 to the display 2 for playing. For example, when the data A is an image, the electronic device 100 may display the image on the display 2. In this way, the electronic device 100 shares the image from the display 1 to the display 2 for display.

In some implementations, in addition to displaying the data A on the display 2, the electronic device 100 may further display content related to the data A. The content may be content obtained by the electronic device 100 through further responding based on the data A. For example, when the electronic device 100 shares a location to another display for display, the electronic device 100 may display, on the another display, a map including the location, or display a route map for reaching the location. In this embodiment of this application, content displayed on another display after the electronic device 100 performs cross-screen data sharing is not limited.

In addition, when the electronic device 100 displays the data A on the display 2, the electronic device 100 may further output a voice prompt, vibration, and the like related to the data A.

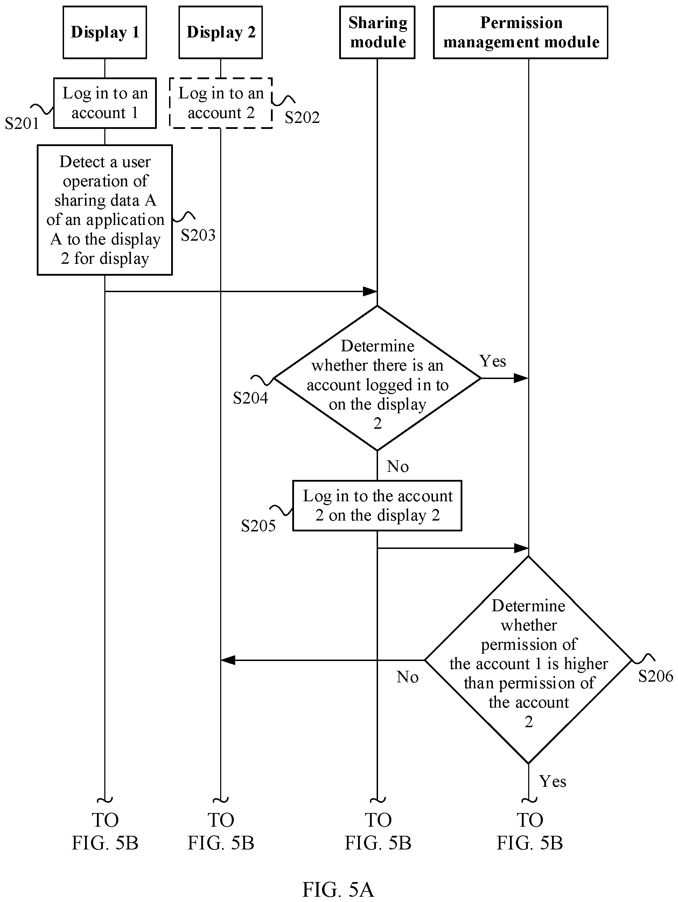

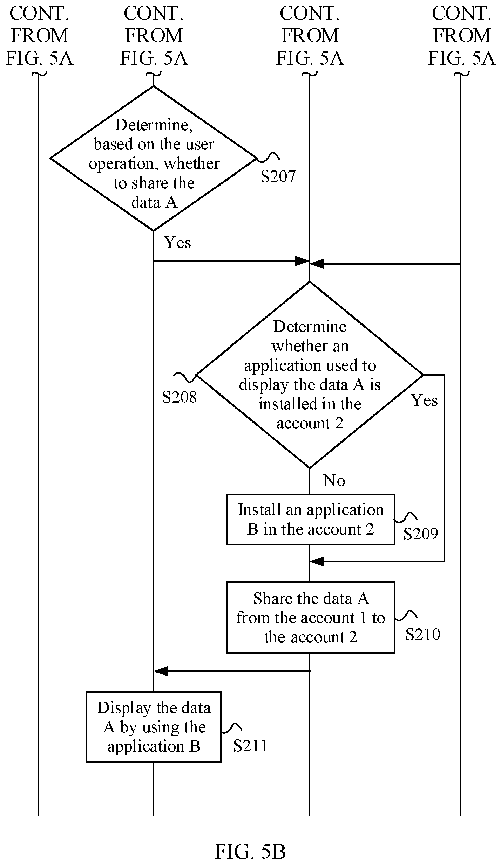

FIG. 5A and FIG. 5B are another flowchart of internal interaction involved when the electronic device 100 performs cross-screen sharing.

As shown in FIG. 5A and FIG. 5B, a cross-screen sharing method provided in this embodiment of this application relates to a display 1, a display 2, a sharing module, and a permission management module in the electronic device 100. The display 1 and the display 2 may be any two displays in the electronic device 100. For specific descriptions of the sharing module and the permission management module, refer to related content in FIG. 3B. Details are not described herein.

S201: The electronic device 100 logs in to an account 1 on the display 1.

S202: The electronic device 100 logs in to an account 2 on the display 2.

S203: The electronic device 100 detects a user operation of sharing data A of an application A to the display 2 for display.

With reference to FIG. 4, steps S201 to S203 are similar to steps S101 to S103 shown in FIG. 4. For specific descriptions of steps S201 to S203, refer to related descriptions of the foregoing steps S101 to S103. Details are not described herein. In addition, it should be noted that step S202 is an optional step.

S204: The electronic device 100 determines, by using the sharing module, whether there is an account logged in to on the display 2.

After the electronic device 100 detects a user operation of sharing the data A to the display 2 for display, the electronic device 100 may determine whether the account is logged in to on the display 2. If no account is logged in to on the display 2, the electronic device 100 performs step S205; otherwise, the electronic device 100 performs step S206.

In some implementations, step S203 may be changed as that the electronic device 100 detects a user operation of sharing the data A of the application A to the account 2. In this case, the electronic device 100 may determine, by using the sharing module, whether the account 2 is logged in to on a display of the electronic device 100. If the account 2 is not logged in to on a display, the electronic device 100 logs in to the account 2 on a display (for example, the display 2); otherwise, the electronic device 100 performs step S206. When the electronic device 100 determines that the account 2 is not logged in to on a display, the electronic device 100 may automatically select a display to log in to the account 2, or log in to the account 2 on a display based on a selection of a user. This is not limited in embodiments of this application.

S205: The electronic device 100 logs in to the account 2 on the display 2 by using the sharing module.

That the electronic device 100 logs in to the account 2 on the display 2 may include the following two cases:
(1) The electronic device 100 automatically logs in to the account 2 on the display 2.
   In other words, after determining that no account is logged in to on the display 2, the electronic device 100 is automatically triggered to log in to the account on the display 2. The account 2 to which the electronic device 100 logs in on the display 2 may be an account randomly selected by the electronic device 100, or may be an account logged in to last time on the display 2, or the like. The account to which the electronic device 100 logs in on the display 2 is not limited in this embodiment of this application.
(2) The electronic device 100 prompts the user to log in to the account on the display 2, and logs in to the account 2 on the display 2 based on a user operation.

In other words, after the electronic device 100 determines that no account is logged in to on the display 2, the electronic device 100 may output prompt information, to prompt the user whether to log in to the account on the display 2. For example, the electronic device 100 may display an account login interface on the display 2, to prompt the user to log in to the account on the display 2. Further, the electronic device 100 may detect an operation of selecting an account and logging in to the account on the account login interface by the user, and log in to the account on the display 2. In this way, the user may determine, based on a will of the user, whether to log in to the account on the display 2. Further, the user may further select, based on the will of the user, an account to log in to.

It may be understood that, when the user rejects to log in to the account on the display 2, cross-screen sharing of the data A fails.

S206: The electronic device 100 determines, by using the permission management module, whether permission of the account 1 is higher than permission of the account 2.

For example, when the permission of the account 1 is higher than the permission of the account 2, the electronic device 100 may further determine whether an application used to display the data A is installed in the account 2, that is, perform step S208. Otherwise, the electronic device 100 rejects to share the data A, or the electronic device 100 determines, based on a user operation, whether to share the data A, that is, perform step S207.

S207: The electronic device 100 determines, based on the user operation performed on the display 2, whether to share the data A.

In other words, when the permission of the account 1 is equal to or lower than the permission of the account 2, the electronic device 100 may output prompt information on the display 2, to prompt the user whether to agree to share the data A to the account 2.

In this way, when the electronic device 100 shares data from a display with low permission to a target display with high permission or same permission for display, the electronic device 100 can display the data on the display with high permission only after obtaining consent of a user that controls the target display.

When the electronic device 100 determines, based on the user operation, to share the data A, the electronic device 100 further determines whether an application used to display the data A is installed in the account 2, that is, performs step S208. Otherwise, cross-screen sharing of the data A fails.

S208: The electronic device 100 determines, by using the sharing module, whether the application used to display the data A is installed on the account 2.

The application may be the application A mentioned in step S203, or may be an application of a same type as the application A. For example, it is assumed that the application A is a video playback application, and the data A is a video. When determining whether the application used to display the data A is installed in the account 2, the electronic device 100 may determine whether the application A or another video playback application that can play a video is installed in the account 2.

If the electronic device 100 determines that no application used to display the data A is installed in the account 2, the electronic device 100 performs step S209; otherwise, the electronic device 100 performs step S210.

It should be understood that when the data A is from a storage space shared by all accounts in the electronic device 100, step S208 is an optional step.

S209: The electronic device 100 installs an application B in the account 2 by using the sharing module.

The application B may be the application A, or may be an application that is of a same type as the application A and that can identify the data A.

That the electronic device 100 installs the application B in the account 2 may include the following two cases:
(1) The electronic device 100 automatically installs the application B in the account 2.
   In other words, after determining that the application used to display the data A is not installed in the account 2, the electronic device 100 is automatically triggered to install the application B in the account 2.
(2) The electronic device 100 prompts the user to install the application B, and installs the application B in the account 2 based on a user operation.

In other words, after the electronic device 100 determines that no account is logged in to on the display 2, the electronic device 100 may output prompt information, to prompt the user whether to install the application B in the account 2. For example, the electronic device 100 may display, on the display 2, a plurality of applications that can be installed, and the user may select one of the applications for installation, or reject to install an application, or the like. In this way, the user may determine, based on a will of the user, whether to install an application in the account 2, and further, the user may select an application for installation based on a will of the user.

It may be understood that, when the user rejects to install the application B in the account 2, cross-screen sharing of the data A fails, or the electronic device 100 still shares the data A to the storage space of the account 2, and displays the data A on the display 2. In this case, the display 2 may display the data A, but effect of displaying the data A on the display 2 may not be restored to effect of displaying the data A on the display 1.

It may be understood that a sequence of performing steps S206 and S207 and steps S208 and S209 is not limited in this embodiment of this application. For example, the electronic device 100 may first perform steps S206 and S207, and then perform steps S208 and S209. In this way, the electronic device 100 may first determine whether the permission of the account 1 is higher than the permission of the account 2, and then determine whether the application used to display the data A is installed in the account 2. Alternatively, the electronic device 100 may first perform steps S208 and S209, and then perform steps S206 and S207. In this way, the electronic device 100 first determines whether the application used to display the data A is installed in the account 2, and then determines whether the permission of the account 1 is higher than the permission of the account 2. Alternatively, the electronic device 100 may simultaneously perform steps S206 and S208. In this way, the electronic device 100 may simultaneously determine whether the permission of the account 1 is higher than the permission of the account 2, and whether the application used to display the data A is installed in the account 2.

S210: The electronic device 100 shares the data A from the account 1 to the account 2 by using the sharing module.

Specifically, the electronic device 100 sends the data A to a storage space of the account 2, so that the electronic device 100 can display, on the display 2, the data A from the storage space of the account 2.

It should be understood that step S201 is an optional step, because when the data A is content in the storage space shared by all accounts in the electronic device 100, the electronic device 100 does not need to share the data A from the account 1 to the account 2, any account in the electronic device 100 can access the data A, and the data A is displayed on a display on which the account is logged in to.

S211: The electronic device 100 displays the data A on the display 2 by using the application B.

In other words, the electronic device 100 may display, on the display 2, content of the application B installed in the account 2, and the electronic device 100 may display the data A on the display 2 by using the application B.

For example, when the data A is a video, the application B may be a video playback application. The electronic device 100 may display a playback interface of the video playback application on the display 2, and play the video on the playback interface. For example, when the data A is a location C, the application B may be a navigation application. The electronic device 100 may display a user interface of the navigation application on the display 2, and display, on the user interface, a navigation route from a current location of the electronic device 100 to the location C. In this way, the electronic device 100 can share data from one display to another display for display.

It should be understood that, for specific content that is not mentioned in steps S201 to S211, refer to descriptions of the foregoing steps S101 to S108. Details are not described herein.

The following uses a navigation application as an example to describe a related user interface involved when the electronic device 100 shares, in a cross-screen manner, a destination entered by the user in the navigation application.

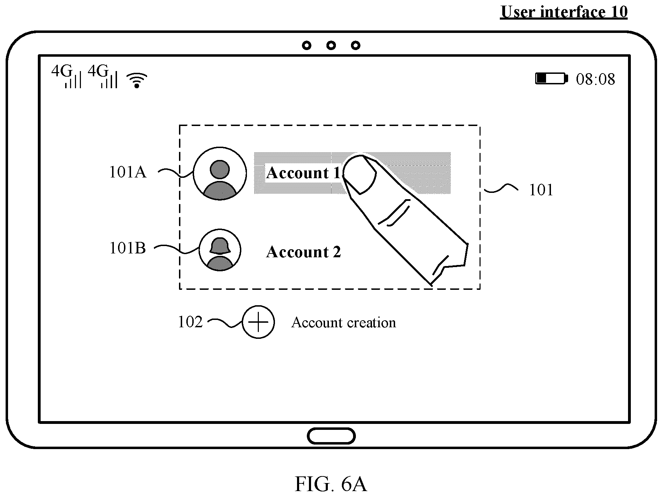

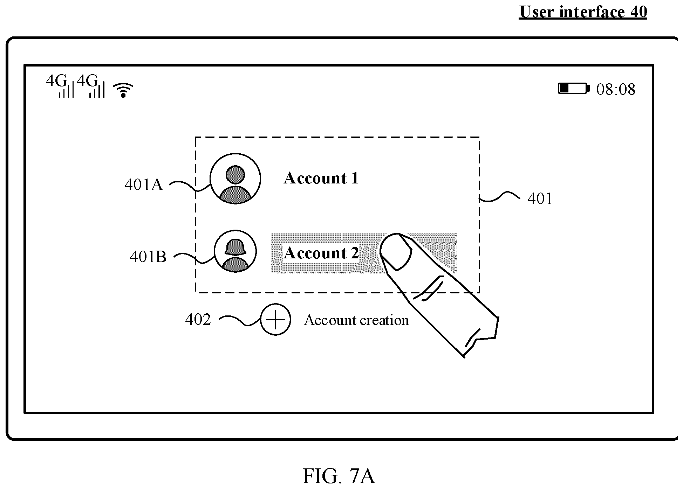

FIG. 6A to FIG. 6G and FIG. 7A to FIG. 7E are some user interfaces according to an embodiment of this application. FIG. 6A to FIG. 6G show related user interfaces displayed on the display 1 of the electronic device 100, and FIG. 7A to FIG. 7E show related user interfaces displayed on the display 2 of the electronic device 100. An in-vehicle scenario is used as an example. The electronic device 100 may be an in-vehicle device, the display 1 may be a rear seat screen in the in-vehicle device, and the display 2 may be a central display screen in the in-vehicle device.

FIG. 6A shows an example user interface 10 that is displayed by the electronic device 100 on the display 1 and that is used to log in to an account.

As shown in FIG. 6A, the user interface 10 may include an account selection area 101 and an account creation option 102. The account selection area 101 may be used to display account options respectively corresponding to one or more accounts that are created in the electronic device 100 or that are historically logged in to by the electronic device 100. The electronic device 100 may detect a user operation performed on one of the account options, and log in to, on the display 1, an account corresponding to the account option. The account creation option 102 may be used to trigger account creation.

For example, the account selection area 101 may include a first account option 101A and a second account option 101B. The first account option 101A indicates an account 1 in the electronic device 100, and the second account option 101B indicates an account 2 in the electronic device 100.

As shown in FIG. 6A, when the electronic device 100 detects a user operation performed on the first account option 101A, for example, a tap operation, in response to the operation, the electronic device 100 logs in to the account 1 on the display 1, and the display 1 may display content from a storage space of the account 1.

It may be understood that accounts created in the electronic device 100 are not limited to the account 1 and the account 2 shown in FIG. 6A. A quantity of accounts included in the electronic device 100 is not limited in this embodiment of this application. The account 1 and the account 2 may be accounts preset in the electronic device 100 in advance, or may be accounts created by a user. A manner of creating an account in the electronic device 100 is not limited in this embodiment of this application.

In addition, the account 1 and the account 2 shown in FIG. 6A may be only a part of accounts in the electronic device 100, and the account 1 and the account 2 may be accounts that can be logged in to on the display 1 in the electronic device 100. In other words, in addition to the account 1 and the account 2, another account, for example, an account 3, is created in the electronic device 100, but only the account 1 and the account 2 may be logged in to on the display 1. For example, the account 1 and the account 2 may be accounts created on the display 1 in the electronic device 100, and the account 3 is an account created on another display in the electronic device 100; or the account 1 and the account 2 may be accounts that are not logged in to by the electronic device 100 on the display, and the account 3 is an account that is logged in to by the electronic device 100 on another display.

For example, the electronic device 100 may display the user interface 10 on the display 1 when the electronic device 100 is powered on or the display 1 is turned on. Alternatively, when the user views a setting application on the display 1, the electronic device 100 may display, on the display 1, the user interface 10 provided by the setting application. An occasion at which the electronic device 100 displays the user interface 10 on the display 1 is not limited in this embodiment of this application.

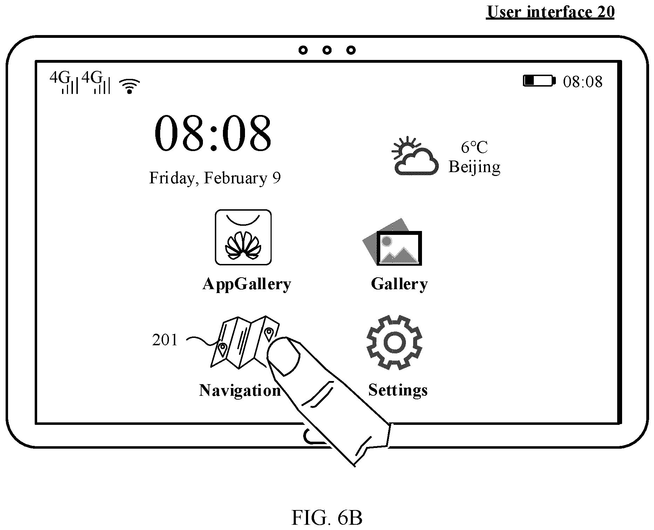

FIG. 6B shows an example user interface 20 that is used for an application menu and that is displayed by the electronic device 100 on the display 1. For example, when the account 1 is logged in to on the display 1, the user interface 20 may be content provided by the account 1.

As shown in FIG. 6B, the user interface 20 may be used to display information such as weather, time, and a date, and one or more application icons. The one or more application icons may be icons of one or more independent applications installed by the electronic device 100 in the account 1, and/or icons of one or more shared applications shared by accounts.

The one or more application icons may include a navigation icon 201. The navigation icon 201 may be an icon of a navigation application installed by the electronic device 100 in the account 1, and content of the navigation application displayed by the electronic device 100 on the display 1 is from a storage space of the account 1.

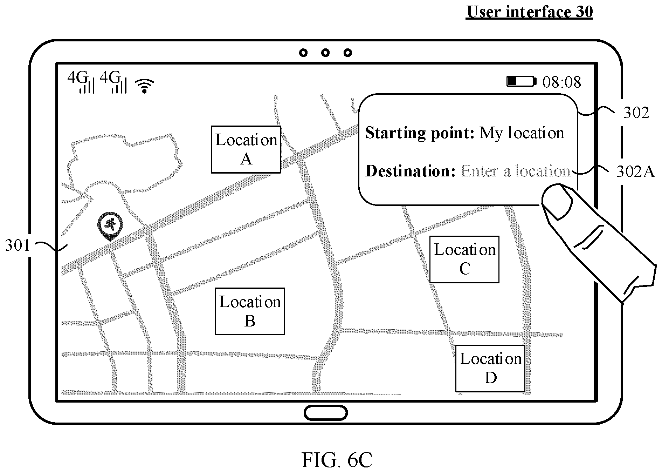

As shown in FIG. 6B, when the electronic device 100 detects a user operation performed on the navigation icon 201, for example, a tap operation, in response to the operation, the electronic device 100 opens the navigation application and displays, on the display 1, a user interface 30 provided by the navigation application shown in FIG. 6C.

As shown in FIG. 6C, the user interface 30 may include a map display area 301 and a navigation bar 302. The map display area 301 is used to display a map of an area in which the electronic device 100 is located and a location of the electronic device 100 on the map, and the navigation bar 302 is used to display a starting point and a destination of a navigation route. The electronic device 100 may detect an operation of entering or changing a starting point or a destination by the user in the navigation bar 302, enter the starting point or the destination specified by the user in the navigation bar 302, and display, in the map display area 301, a navigation route from the starting point to the destination in the navigation bar 302.

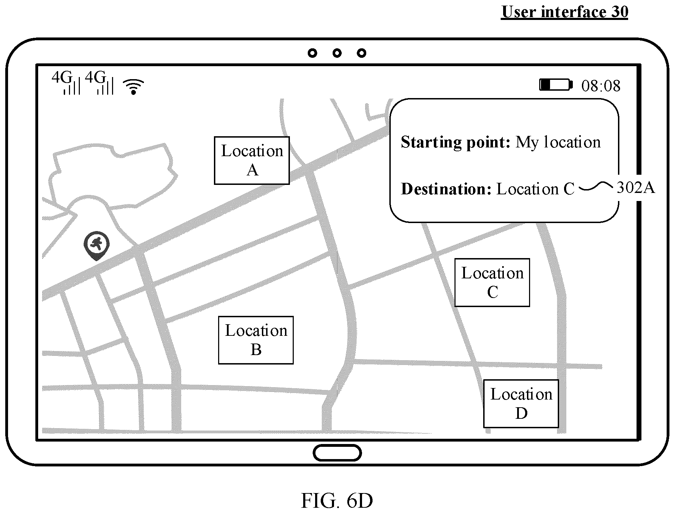

As shown in FIG. 6C, the navigation bar 302 may include a destination option 302A. When the electronic device 100 detects an operation performed on the destination option 302A to enter a destination "location C" specified by the user, the electronic device 100 may display the destination "location C" entered by the user in the destination option 302A shown in FIG. 6D.

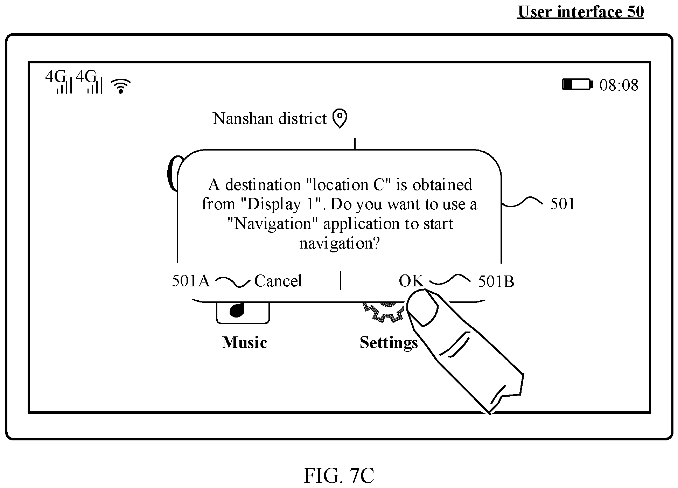

Optionally, after detecting that the user enters the destination "location C" in the destination option 302A, the electronic device 100 may be triggered to send the destination "location C" to a storage space of another account (for example, the account 2), and determine, based on permission of the another account and the account (for example, the account 1) logged in to on the current display 1, whether to display related content of the destination "location C" on the display (for example, the display 2) on which the account is logged in to. For details, refer to related content in FIG. 7C to FIG. 7E. Details are not described herein.

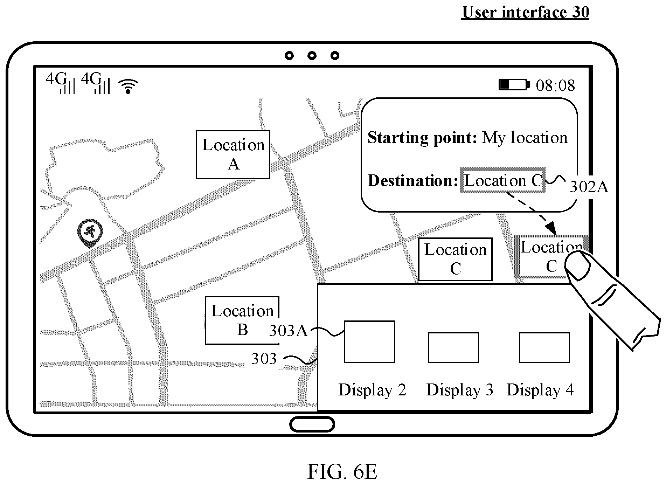

As shown in FIG. 6E, after the user enters the destination, the electronic device 100 may detect a drag operation performed on the destination option 302A. In response to the operation, the electronic device 100 may display, on the user interface 30, an option bar 303 shown in FIG. 6E. The option bar 303 may be used to display an option corresponding to a display other than the display 1 in the electronic device 100.

Optionally, when the electronic device 100 detects the drag operation performed on the destination option 302A, the electronic device 100 may display a screenshot of the destination option 302A that moves with the drag operation.

For example, the electronic device 100 may display the option bar 303 shown in FIG. 6E when detecting that the destination option 302A is dragged to a specified direction, or the destination option 302A is dragged to a specified area. Alternatively, the option bar 303 may be always displayed on the user interface. An occasion at which the option bar 303 appears is not limited in this embodiment of this application.

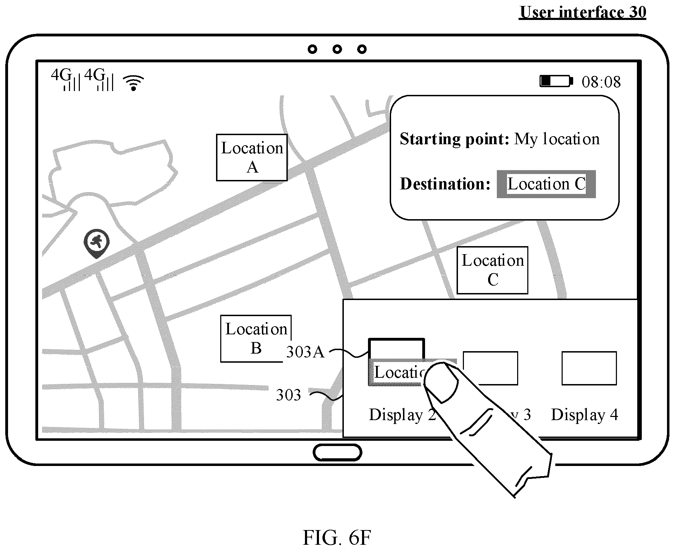

The option bar 303 may include an option 303A, and the option 303A corresponds to the display 2 in the electronic device 100. As shown in FIG. 6F, when the electronic device 100 detects that a drag operation performed by the user on the destination option 302A is moved to the option 303A and ends, the electronic device 100 may send data indicated by the destination option 303A, that is, the destination "location C", to an account that is logged in to on the display 2 corresponding to the option 303A, so that the electronic device 100 displays related content of the destination "location C" on the display 2.

Optionally, in addition to displaying an option corresponding to the display, the option bar 303 may be further configured to display an option corresponding to an account. In this case, the electronic device 100 may detect the drag operation performed by the user on the destination option 302A for dragging the destination option 302A to an option corresponding to one of the accounts in the option bar 303, and trigger sending of data indicated by the destination option 302A to an account corresponding to the option.

For example, before the electronic device 100 sends data from one account to another account, the electronic device 100 may determine, with reference to whether a sharing condition is met, whether permission of the two accounts meet a preset requirement, and the like, whether the electronic device 100 can successfully share the data. It is assumed that the electronic device 100 needs to share, to the account 2, the destination "location C" entered by the user in the navigation application of the account 1. A sharing condition may include: The account 2 is logged in to on a display of the electronic device 100, a navigation application is installed in the account 2, and the like. That the permission of the two accounts meets the preset requirement may mean that the permission of the account 1 is higher than the permission of the account 2, and the like. For details, refer to a subsequent method procedure. Details are not described herein.

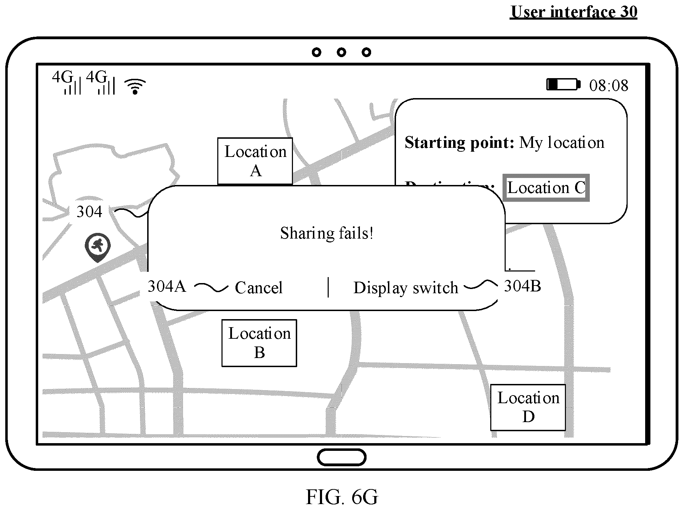

When the electronic device 100 fails to share the data indicated by the destination option 303A, the electronic device 100 may display, on the user interface 30, prompt information 304 shown in FIG. 6G, where the prompt information 304 prompts that cross-screen data sharing fails.

As shown in FIG. 6G, the prompt information 304 may include a cancel option 304A and a display switch option 304B. The cancel option 304A may be used to cancel cross-screen data sharing, and the display switch option 304B may be used to switch a target display for data sharing.

In addition, when the electronic device 100 successfully shares the data indicated by the destination option 303A, the electronic device 100 may display related content of the data on a display on which an account that successfully receives the data is logged in to. For details, refer to related content in FIG. 7C to FIG. 7E. Details are not described herein.

It should be noted that when the electronic device 100 detects an operation performed by the user on content displayed on the user interface for sharing the content to another display for display, the content operated by the user may be different from content finally shared by the electronic device 100. It can be learned from FIG. 6E that the content operated by the user is the destination option 302A shown in FIG. 6E, and the data shared by the electronic device 100 is the destination "location C". It can be learned that the content that is operated by the user and that is displayed on the display is a presentation form, on the interface, of the content finally shared by the electronic device 100. For example, when the user operates a movie played online in a video playback application, and shares the movie to another display for display, data shared by the electronic device 100 may be a name of the movie.

It can be learned that, in FIG. 6A to FIG. 6G, a location entered by the user in the navigation application is used as content shared in a cross-screen manner by the electronic device 100. It should be understood that the content shared in the cross-screen manner by the electronic device 100 is not limited in embodiments of this application. In another embodiment of this application, the content shared in the cross-screen manner may include content in various forms such as a text, a table, an image, a document, a video, an audio, and a link. A data form of the content shared in the cross-screen manner is not limited in embodiments of this application. In addition, the electronic device 100 may share content of any other application in addition to the content in the navigation application. The application is not limited in embodiments of this application.

FIG. 7A shows an example user interface 40 that is displayed by the electronic device 100 on the display 2 and that is used to log in to an account.

As shown in FIG. 7A, the user interface 40 may include an account selection area 401 and an account creation option 402. The account selection area 401 may be used to display account options respectively corresponding to one or more accounts that are created in the electronic device 100 or that are historically logged in to by the electronic device 100. The electronic device 100 may detect a user operation performed on one of the account options, and log in to, on the display 2, an account corresponding to the account option. The account creation option 402 may be used to trigger account creation.

For example, the account selection area 401 may include a first account option 401A and a second account option 401B. The first account option 401A indicates an account 1 in the electronic device 100, and the second account option 401B indicates an account 2 in the electronic device 100.

As shown in FIG. 7A, when the electronic device 100 detects a user operation performed on the second account option 401B, for example, a tap operation, in response to the operation, the electronic device 100 logs in to the account 2 on the display 2, and the display 2 may display content from a storage space of the account 2.

It should be understood that the user interface 40 is similar to the user interface 10 shown in FIG. 6A. For specific content that is not mentioned in the user interface 40, refer to related content in FIG. 6A. Details are not described herein.

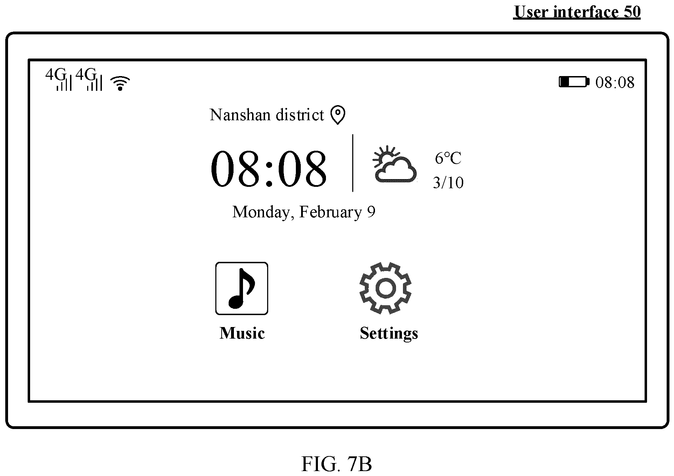

FIG. 7B shows an example user interface 50 that is used for an application menu and that is displayed by the electronic device 100 on the display 2. For example, when the account 2 is logged in to on the display 2, the user interface 50 may be content provided by the account 2.

As shown in FIG. 7B, the user interface 50 may be used to display information such as weather, time, and a date, and one or more application icons. The one or more application icons may be icons of one or more independent applications installed by the electronic device 100 in the account 2, and/or icons of one or more shared applications shared by accounts.

It can be learned from comparison between FIG. 6B and FIG. 7B that, for the display 1 and the display 2 on which different accounts are logged in to, content displayed on the display 1 and the display 2 may be different. Content displayed on each display is independent, each display is equivalent to an independent device, and utilization of a device including a plurality of displays is developed to a greater extent.

When the electronic device 100 detects an operation of sending, by the user, the destination "location C" displayed on the display 1 to the display 2 for display, the electronic device 100 may display, on the display 2, prompt information 501 shown in FIG. 7C. The prompt information 501 prompts the user whether to start navigation to the destination "location C" on the display 2 by using a navigation application.

For example, the electronic device 100 may display the prompt information 501 shown in FIG. 7C on the display 2 when detecting the operation of sending, by the user, the destination "location C" displayed on the display 1 to the display 2 for display, and permission of the account 2 is higher than permission of the account 1.

As shown in FIG. 7C, the prompt information 501 may include a cancel option 501A and an OK option 501B. The cancel option 501A may be used to trigger the electronic device 100 to reject to display related information of the destination "location C" on the display 2, and the OK option 501B may be used to trigger the electronic device 100 to confirm to display related information of the destination "location C" on the display 2, that is, start the navigation to the destination "location C" on the display 2 by using the navigation application.

It should be understood that, in addition to displaying the prompt information 501 on the display 2 to prompt the user whether to start the navigation to the destination "location C" on the display 2 by using the navigation application, the electronic device 100 may output voice prompt information to prompt the user whether to start the navigation to the destination "location C" on the display 2 by using the navigation application. In this way, in an in-vehicle scenario, the user can be prevented from being distracted from viewing the display content on the display 2, thereby ensuring traveling safety of the vehicle.

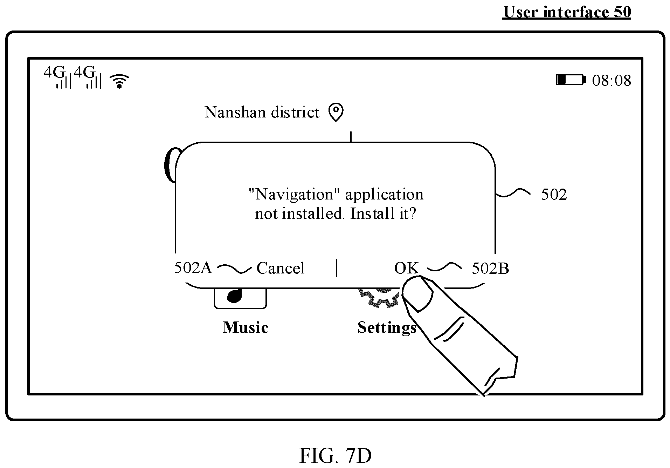

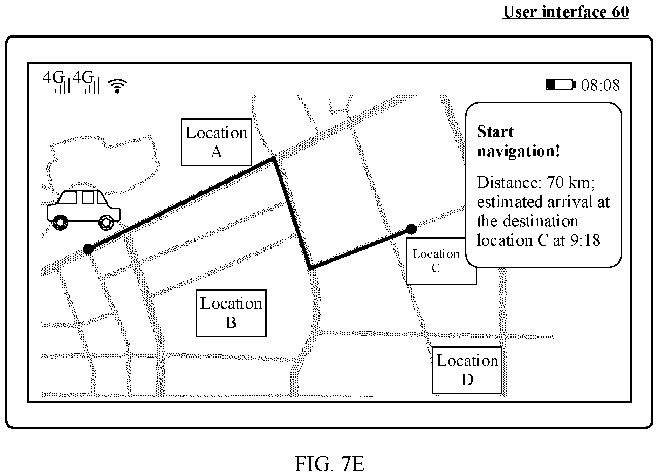

For example, when the electronic device 100 detects a user operation performed on the OK option 501B, for example, a tap operation, in response to the operation, the electronic device 100 may display, on the display 2, the related information of the destination "location C" shared by the display 1, that is, display a user interface 60 shown in FIG. 7E. Further, if the navigation application is not installed in the account logged in to on the display 2, after the electronic device 100 detects the user operation performed on the OK option 501B, the electronic device 100 may change the prompt information 501 to prompt information 502 shown in FIG. 7D.

For example, when the electronic device 100 detects a user operation performed on the cancel option 501A, for example, a tap operation, in response to the operation, the electronic device 100 may close the prompt information 501 on the display 2. Further, the electronic device 100 may further display, on the display 1, the prompt information 304 shown in FIG. 6G. The prompt information 304 prompts the user that cross-screen sharing fails.

It should be understood that the electronic device 100 may further determine, by detecting a voice instruction of the user, whether the user starts the navigation to the destination "location C" on the display 2 by using the navigation application. In other words, the user may control the electronic device 100 by using a voice, to adjust display content on the display 2. In this way, in the in-vehicle scenario, the user can be prevented from being distracted from viewing or operating the display 2. A user operation detected by the electronic device 100 is similar in the following. Details are not described in the following.

As shown in FIG. 7D, the prompt information 502 prompts the user whether to install a navigation application, and the prompt information 502 may include a cancel option 502A and an OK option 502B. The cancel option 502A is used to trigger the electronic device 100 to reject to install the navigation application, and the OK option 502B is used to trigger the electronic device 100 to confirm to install the navigation application.

For example, when the electronic device 100 detects a user operation performed on the OK option 502B, for example, a tap operation, in response to the operation, the electronic device 100 may install the navigation application, and display a user interface 60 shown in FIG. 7E after installation of the navigation application is completed.

For example, when the electronic device 100 detects a user operation performed on the cancel option 502A, for example, a tap operation, in response to the operation, the electronic device 100 may close the prompt information 502 on the display 2. Further, the electronic device 100 may further display, on the display 1, the prompt information 304 shown in FIG. 6G. The prompt information 304 prompts the user that cross-screen sharing fails. Alternatively, when the electronic device 100 detects a user operation performed on the cancel option 502A, for example, a tap operation, in response to the operation, the electronic device 100 may open an application, installed in the account 2, that is similar to the navigation application and that has a navigation function, and display a navigation route, provided by the application, from a current location of the electronic device 100 to the location C.

As shown in FIG. 7E, the user interface 60 may be a user interface provided by the navigation application installed in the account (that is, the account 2) logged in to on the display 2. The user interface 60 may be used to display the navigation route from the current location of the electronic device 100 to the location C, and related navigation information, for example, a distance from the current location of the electronic device 100 to the location C, and travel time. Alternatively, the electronic device 100 may further play, by using a voice, the navigation route from the current location of the electronic device 100 to the location C and the related navigation information, for example, the distance from the current location of the electronic device 100 to the location C and the travel time.

For example, when the permission of the account 2 is lower than the permission of the account 1, and the electronic device 100 detects an operation of sending, by the user, the destination "location C" displayed on the display 1 to the display 2 for display, the electronic device 100 may directly send the destination "location C" to the account 2, and display the user interface 60 shown in FIG. 7E. In this way, the electronic device 100 does not need to display the prompt information 501 shown in FIG. 7C, and directly displays, on the display 2, the navigation route to the destination "location C".

In addition, when the electronic device 100 detects an operation of sending, by the user, the destination "location C" displayed on the display 1 to the display 2 for display, if no account is logged in to on the display 2, the electronic device 100 automatically logs in to an account on the display 2. The account may be a sub-account of the account logged in to on the display 1, or may be an account logged in to last time on the display 2. This is not limited in this embodiment of this application. Alternatively, if no account is logged in to on the display 2, the electronic device 100 may display prompt information on the display 2, to prompt the user whether to log in to an account on the display 2.

In addition, when cross-screen sharing of the destination "location C" fails, content displayed on the display 2 may not be affected. For example, the display 2 may always display the user interface 50 shown in FIG. 7B. That the cross-screen sharing of the destination "location C" fails may include: No account is logged in to on the display 2, no navigation application is installed in the account logged in to on the display 2, permission of the account logged in to on the display 2 is higher than permission of the account logged in to on the display 1, and the like. For details, refer to a subsequent method flowchart. Details are not described herein.

It should be understood that, if the user enters a destination on the display 2 in advance, for example, a "location A", when the electronic device 100 sends the destination "location C" to the display 2 for display, the electronic device 100 may change the destination "location A" entered on the display 2 to the destination "location C", or set the destination "location C" as an intermediate destination. In other words, the navigation application may first display, on the display 2, the navigation route from the current location to the "location C", and then display a navigation route from the "location C" to the "location A". Alternatively, the electronic device 100 sets the "location A" as the intermediate destination, and sets the "location C" as a final destination. In other words, the navigation application may first display, on the display 2, a navigation route from the current location to the "location A", and then display a navigation route from the "location A" to the "location C". It can be learned that when the electronic device 100 sends content in the account 1 to the account 2 and displays the content on the display 2, the electronic device 100 may retain the content originally displayed on the display 2, or replace the content originally displayed on the display 2 with the content in the account 1. This is not limited in embodiments of this application.

It can be learned from FIG. 7A to FIG. 7E that, in a process in which the electronic device 100 shares the content on the display 1 to the display 2 for display, the electronic device 100 may display prompt information on the display 2. The prompt information prompts the user whether to display, on the display 2, the content shared from the display 1, or the electronic device 100 may directly display, on the display 2, the content shared from the display 1, or the electronic device 100 rejects to display, on the display 2, the content shared from the display 1.

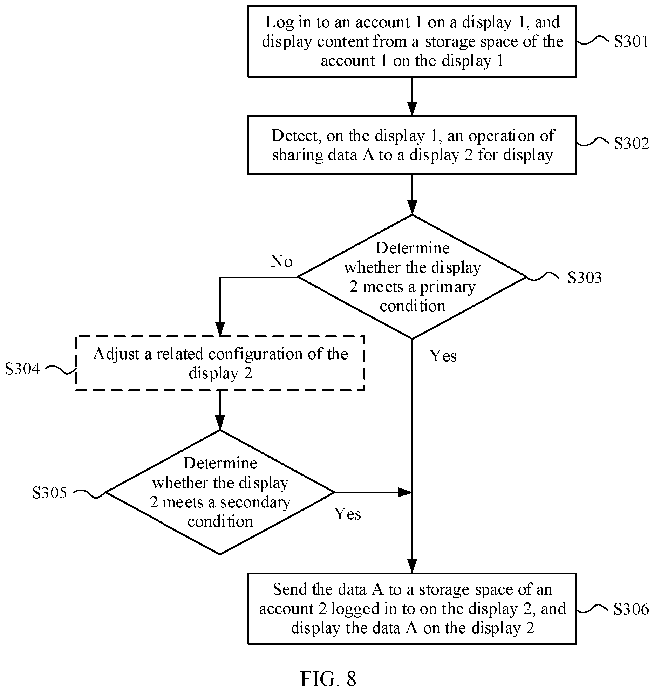

FIG. 8 is a flowchart of a cross-screen sharing method according to an embodiment of this application.

As shown in FIG. 8, the method includes the following steps.

S301: An electronic device 100 logs in to an account 1 on a display 1, and displays content from a storage space of the account 1 on the display 1.

The electronic device 100 may include a plurality of displays, and these displays may be connected to a main body of the electronic device 100 by using a wired or wireless connection. The display 1 may be any one of the plurality of displays. In this embodiment of this application, the display 1 may also be referred to as a first display, and the account 1 may also be referred to as a first account.

The electronic device 100 may include a plurality of accounts. These accounts have independent storage spaces, and the storage spaces are isolated from each other. The storage space may be used to store data of an application when the application is installed, and data generated and changed during running of the application. The plurality of accounts may be accounts registered by the electronic device 100 or another device. For specific descriptions of registering an account by the electronic device 100, refer to related content in step S101. Details are not described herein.

That the electronic device 100 logs in to the account 1 on the display 1 may include the following two cases:
(1) The electronic device 100 automatically logs in to the account 1 on the display 1.
(2) The electronic device 100 logs in to the account 1 on the display 1 based on a user operation.

For example, refer to FIG. 6A. The electronic device 100 may display, on the display 1, the user interface 10 shown in FIG. 6A. The electronic device 100 may detect a user operation performed on the first account option 101A, and log in to the account 1 on the display 1.

For specific descriptions of logging in to the account by the electronic device 100, refer to related content in step S101. Details are not described herein.

In addition, the electronic device 100 may further include a storage space shared by all accounts. In this case, in addition to displaying, on the display, content in a storage space of the account logged in to on the display, the electronic device 100 may further display, on the display, content in the storage space shared by all accounts.

Further, an application installed in the independent storage space of each account may be an independent application, and an application installed in the storage space shared by all accounts may be a shared application.
The independent application is an application independently installed by each account. Content of an independent application installed in a storage space of an account can be displayed only by a display on which the account is logged in to, and data generated during running of the independent application is also stored in the independent storage space of the account. The shared application is an application shared by the accounts. Content of the shared application displayed on each display is from a shared storage space, and data generated during running of the shared application is also stored in the shared storage space. It can be learned that a change that is of content of an independent application displayed on one display and that is made by the user does not affect content of the independent application displayed on another display, and independent applications displayed on the displays are independent of each other. However, a change that is of content of a shared application displayed on one display and that is made by the user synchronously changes content of the shared application displayed on another display.

Determining an application in the electronic device 100 as the independent application or the shared application may include the following three cases:
(1) A developer divides the independent application and the shared application.
   In this case, the developer may predefine which part of applications belong to independent applications and which part of applications belong to shared applications. In this way, when a system application of the electronic device 100 is preset, or when the electronic device 100 downloads an application from a third party, how to install the application is determined based on application division performed by the developer in advance, that is, whether to install the application in a storage space shared by users or in an independent storage space of each user.
(2) The electronic device 100 divides the independent application and the shared application.
   In this case, the developer may import a classification standard of the application into the electronic device 100 in advance, and the electronic device 100 classifies the application based on the classification standard. For specific descriptions of the classification standard, refer to subsequent content. Details are not described herein.
(3) The user divides the independent application and the shared application.

In this case, when installing an application, the electronic device 100 may display prompt information, to query the user whether to install the application as the independent application or the shared application.

It may be understood that the independent application and the shared application may be further divided with reference to the foregoing a plurality of cases. For example, before the electronic device 100 is put into the market and is used by a consumer, some built-in applications are preset in the electronic device 100 in advance. The developer may determine in advance whether the built-in application is the independent application or the shared application. After the electronic device 100 is used by the consumer, the user who uses the electronic device 100 may determine whether the application installed in the electronic device 100 is the independent application or the shared application. A manner of dividing the independent application and the shared application by the electronic device 100 is not limited in embodiments of this application.

Classification standards of the independent application and the shared application may include the following three types:
(1) The independent application involves privacy data, while the shared application does not involve the privacy data.

The independent application is installed in the independent storage space of each account, and storage spaces are isolated from each other. Data in storage spaces of different accounts cannot access each other. The shared application is installed in the storage space shared by the accounts, and the accounts can access the storage space. Therefore, the independent storage space of each account may be used to store data of the independent application having the privacy data, and the storage space shared by the accounts may be used to store data of the shared application having no privacy data.

The privacy data may be personal information of the user, and the information is inconvenient to be shared with another person, for example, may include a personal browsing record, a playback record, personal data information, identity information, and the like.

It can be learned that a location for installing the application is determined based on whether the application involves privacy data, so that the privacy data entered by the user when the user uses an electronic device including a plurality of displays is prevented from being stolen by another user, the privacy data of the user is prevented from being leaked, and privacy security of the user is ensured.

(2) The independent application is a third-party application, and the shared application is a system application.

The third-party application is an application that needs to be obtained by the user from a channel like AppGallery or a web page in a process of using the electronic device 100. The user may select, based on a requirement preference of the user, an application that needs to be installed. The system application is an application preset in the electronic device 100, for example, applications such as Phone, Messages, Settings, and the like.

It can be learned that a location for installing the application is determined based on whether the application is an application that is selected and installed based on the requirement of the user. This not only can meet use and entertainment requirements of each user, but also can ensure that use of the application by each user does not affect each other. In addition, the electronic device can display functions of some basic applications on each display, to reduce trouble of installing these basic applications by the user and improve convenience of operating the electronic device by the user.

(3) The independent application is an application that does not need to run for long time, and the shared application is an application that needs to run for long time.

Because the electronic device 100 includes a plurality of displays, different users may view, on different displays, applications installed on the electronic device 100. In this case, a phenomenon of simultaneous data generation of a plurality of applications easily occurs. Consequently, a large quantity of system resources are occupied at the same time, and performance of the device is greatly affected. In this case, for an application that needs to run for long time, for example, applications such as Desktop and SystemUI, the electronic device 100 may install the application only once, and the application is installed in a storage space shared by the accounts.

In this way, the displays can display content of the application, and at the same time, the application is displayed on a plurality of displays by using only one process. This reduces simultaneously generated data of the application displayed on the displays in a multi-screen display scenario, reduces system resource consumption, accelerates system calculation efficiency, and improves device performance.

It may be understood that classification standards of the independent application and the shared application are not limited to the foregoing three classification standards. In addition, the independent application and the shared application may be determined based on any division and combination of the foregoing three classification standards. For example, the independent application may be a third-party application that involves privacy data, and the shared application may be an application that does not involve privacy data and needs to run for long time. For another example, the independent application may be a third-party application that does not need to run for long time, and the shared application may be a system application that does not involve privacy data and needs to run for long time. Definitions of the independent application and the shared application are not limited in embodiments of this application.

That the electronic device 100 installs the application specifically includes: creating a file directory of the application in a storage space, copying and decompressing an installation package of the application into the file directory, and creating, in the storage space, a data directory used to store data generated during running of the application.

For example, when the electronic device 100 installs the application 1 as the independent application on the display 1 on which the account 1 is logged in to, the electronic device 100 installs the application 1 in the storage space of the account 1, that is, creates a file directory and a data directory of the application 1 in the storage space of the account 1, and copies and decompresses an installation package of the application 1 into the file directory. When the electronic device 100 installs the application 1 as the shared application on the display 1, the electronic device 100 installs the application 1 in the shared storage space, that is, creates a file directory and a data directory of the application 1 in the shared storage space, and copies and decompresses an installation package of the application 1 into the file directory.

In addition, it should be noted that because the independent application may be installed in the electronic device 100 for a plurality of times, the electronic device 100 may obtain the installation package of the independent application only once, and install the independent application for a plurality of times, so that a same independent application may be installed for different accounts. When installing the independent application, the electronic device 100 may set an application identifier, for example, an index, of the independent application, and use the application identifier to distinguish a same independent application installed in different storage spaces of the electronic device 100. In this way, for installation of an application on a multi-screen device, an application developer does not need to perform adaptation on the application and provide a plurality of installation packages of the application, so that the application can be installed on the multi-screen device for a plurality of times. The electronic device 100 may provide an application identifier to distinguish the application that is installed for a plurality of times. This reduces the difficulty in promoting an ecosystem of the multi-screen device.

In some implementations, that the electronic device 100 installs the independent application on the display may include the following two cases:
(1) The electronic device 100 detects, on a display, an operation of installing the independent application, and separately installs the independent application in storage spaces of a plurality of accounts.

In this case, the electronic device 100 detects, on one display, the operation of installing the independent application, and may trigger installation of the independent application on a plurality of displays. For example, in an in-vehicle scenario, the electronic device 100 detects an operation of installing a music application on a central display screen, and in response to the operation, the electronic device 100 installs the music application on the central display screen, a front seat screen, and a rear seat screen. In this way, the user needs to perform an application installation operation only once, to complete a plurality of times of installation of the application, and use the application on a plurality of displays. This improves convenience of application installation.

When the electronic device 100 installs the independent application in the storage spaces of the plurality of accounts, the following several cases may be included:
(a) The plurality of accounts are all accounts that are logged in to.
   In other words, when the electronic device 100 detects, on one display, the operation of installing the independent application, installation of the independent application on all displays on which accounts are logged in to may be triggered.
(b) The plurality of accounts are some accounts filtered based on permission of the accounts.

Different accounts may have different permission. The electronic device 100 may control cross-screen content sharing by the electronic device 100 based on the permission. For example, an account with low permission cannot share content to an account with low permission, and an account with high permission may share content to an account with low permission. For details about permission and permission-based cross-screen sharing, refer to subsequent content. Details are not described herein.

For example, it is assumed that an account 1 and an account 2 are created in the electronic device 100, permission of the account 1 is higher than permission of the account 2, an account with high permission is allowed to install all types of applications, and an account with low permission is not allowed to install a game application. In this case, when the electronic device 100 detects, on an account on which the account 1 is logged in to, an operation of installing the game application, the electronic device 100 installs the game application in a storage space of the account 1 instead of installing the game application in a storage space of the account 2.

(c) The plurality of accounts are accounts selected by the user.

In this case, when detecting an operation of installing an application by the user, the electronic device 100 may display prompt information, to prompt the user to select an account that is allowed to install the application.

(2) The electronic device 100 detects, on a display, an operation of installing the independent application, and installs the independent application only in a storage space of an account logged in to on the display.

In this case, installation of the application on the displays is independent. The user triggers installation of the independent application on the display 1, and the electronic device 100 performs installation of the independent application only on the display 1. In this way, each display is equivalent to an independent device, and the user installs different applications on different displays, to meet use and entertainment requirements of users using different displays.

The permission of the account may indicate a capability of the account in terms of application installation and uninstallation, use of a function and an application, resource access, and the like. Higher permission indicates a stronger capability of the account.

For example, in this embodiment of this application, the electronic device 100 may control cross-screen content sharing based on the permission of the account. An account with high permission may directly share content to an account with low permission. The user needs to be queried or cross-screen content sharing cannot be performed when accounts with same permission perform cross-screen sharing or an account with low permission performs cross-screen sharing to an account with high permission.

Further, the electronic device 100 may further control, based on the permission of the account, a function that can be used by the user on the display. For example, a display on which the account with the high permission is logged in to allows the user to uninstall an application and modify a setting, and a display on which the account with the low permission is logged in to does not allow the user to uninstall an application or modify a setting. For another example, the display on which the account with the high permission is logged in to allows the user to install any type of application, and the display on which the account with the low permission is logged in to does not allow the user to install the game application.

The electronic device 100 may set permission of different accounts in the following two manners:
(1) The electronic device 100 sets permission of different accounts based on displays on which the accounts are logged in to.

For example, the electronic device 100 may set, based on parameters such as a location, a size, performance, and an attribute of a display, permission of an account that logs in to on the display.

For example, in an in-vehicle scenario, the electronic device 100 is an in-vehicle device, and the in-vehicle device may include a plurality of displays such as a central display screen, a front seat screen, and a rear seat screen. An account logged in to on the central display screen has highest permission, and an account logged in to on the rear seat screen has lowest permission.

(2) The electronic device 100 sets permission of an account based on an account type.

When creating or logging in to an account, the electronic device 100 may provide a plurality of types of accounts, and different types of accounts have different permission. For example, the account type may be determined based on a sequence of account creation or login or selection of the user.

For example, different account types may be classified by using a role of the user. For example, the account types may be classified into a parent account, a child account, and the like, where permission of the parent account is higher than permission of the child account. For another example, the account type may be classified into an owner account, an owner authorization account, a guest account, and the like, where permission of the owner account is higher than permission of the owner authorization account, and the permission of the owner authorization account is higher than permission of the guest account.

It should be understood that an account permission setting method is not limited to the foregoing two methods. This is not limited in embodiments of this application.

S302: The electronic device 100 detects, on the display 1, an operation of sharing data A to the display 2 for display.

The data A may be from the storage space of the account 1, and the data A may be data in a form of text, image, table, video, audio, document, link, or the like. A presentation form of the data A is not limited in embodiments of this application.

The data A may be content provided by an application A. Specifically, the data A may be data that is entered to enable a function provided by the application A when the electronic device 100 displays the application A on the display 1, or the data A may be data provided by the application A when the electronic device 100 displays the application A on the display 1. The application A is an independent application or a shared application installed in the account 1.

For example, the electronic device 100 may display the data A or indication information of the data A on the display 1, and detect an operation (for example, a first operation) of sharing the data A by the user to the display 2, in response to the operation, the electronic device 100 obtains the data A, and uses the data A as content that needs to be shared by the account 1 with the account 2. In this embodiment of this application, the data A may also be referred to as first content, and the display 2 may also be referred to as a second display.

For example, refer to FIG. 6C to FIG. 6F. The first content may be the destination option 302A shown in FIG. 6E, the data A may be the destination "location C" corresponding to the destination option 302A, the application A may be the navigation application, and the operation may be the user operation, shown in FIG. 6C to FIG. 6D, performed on the destination option 302A to confirm to enter the destination "location C", or may alternatively be the operation, shown in FIG. 6E to FIG. 6F, that is performed on the destination option 302A and that is of dragging the destination option 302A to the option 303A.

It should be understood that the data A may alternatively be from a storage space shared by all accounts in the electronic device 100. In this case, when the electronic device 100 finally determines to perform cross-screen sharing of the data A, the electronic device 100 may share, during cross-screen sharing, content displayed on one display to another display for display without performing cross-account sharing of the data A.

S303: The electronic device 100 determines whether the display 2 meets a primary condition.

The primary condition includes one or more of the following: An account is logged in to on the display 2, a specified application is installed in the account logged in to on the display 2, permission of the account logged in to on the display 2 is lower than permission of the account 1, and the like. The specified application may be an application used to display the data A. The application may be an application to which the data A belongs when the display 1 displays the data A, that is, the application A mentioned in step S302, or may be an application that is of a same type or has a same function as the application A.

When the electronic device 100 determines that the display 2 does not meet the primary condition, the electronic device 100 rejects to share the data A to the display 2 for display, or the electronic device 100 performs step S304. When the electronic device 100 determines that the display 2 meets the primary condition, the electronic device 100 performs step S306.

For example, when the primary condition is that an account is logged in to on the display 2, the electronic device 100 may perform step S306, that is, share the data A to a storage space of the account that is logged in to on the display 2, and display the data A on the display 2, when determining that an account is logged in to on the display 2. In this way, when the account is logged in to on the display 2, the data A is displayed, and a display behavior of the data may be recorded by using the account, to manage and control content displayed on each display.

For example, when the primary condition is that the specified application is installed in the account logged in to on the display 2, the electronic device 100 may perform step S306, that is, share the data A to a storage space of the account logged in to on the display 2, and display the data A on the display 2, when determining that the specified application is installed in the account logged in to on the display 2. For example, it is assumed that the data A is a video, the specified application may be a video player. When the electronic device 100 determines that the video player is installed in the account logged in to on the display 2, the electronic device 100 may send the video to the storage space of the account logged in to on the display 2, and play the video on the display by using the video player installed in the account 2. In this way, it can be ensured that the display 2 can better display the data A, so that effect of displaying the data A on the display 2 by the electronic device 100 is close to effect of displaying the data A on the display 1.

For example, when the primary condition is that the permission of the account logged in to on the display 2 is lower than the permission of the account 1, the electronic device 100 may perform step S306, that is, share the data A to the storage space of the account logged in to on the display 2, and display the data A on the display 2, when determining that the permission of the account logged in to on the display 2 is lower than the permission of the account 1. In this way, content shared in a cross-screen manner on the multi-screen device can be managed and controlled by using the permission of the account, so that an account whose permission does not meet a requirement cannot directly implement cross-screen content sharing.

For example, when the primary condition includes: an account is logged in to on the display 2, a specified application is installed in the account logged in to on the display 2, and permission of the account logged in to on the display 2 is lower than permission of the account 1, the electronic device 100 can perform step S306 only, that is, share the data A is to the storage space of the account logged in to on the display 2, and display the data A on the display 2, when determining that the account is logged in to on the display 2, the specified application is installed in the account, and the permission of the account is lower than the permission of the account 1.

It may be understood that the primary condition may further include other content. For example, the primary condition may further include: A specified application is displayed on the display 2. In this way, when determining that the specified application is displayed on the display 2, the electronic device 100 may share the data A to the display 2 for display. The primary condition is not limited in embodiments of this application.

It should be understood that when the data A is content provided by a shared application installed in the electronic device 100, the electronic device 100 does not need to determine whether a specified application is installed in an account logged in to on the display 2. This is because the shared application is an application shared by all accounts, and is installed in a storage space shared by all accounts. When the electronic device 100 detects that the data A provided by the application A displayed on the display 1 is shared to the display 2, if the electronic device 100 determines to share the data A to the display 2, in this case, the electronic device 100 can provide the data A by using the application A displayed on the display 2.

In this embodiment of this application, the account logged in to on the display, for example, the account 2, may also be referred to as a second account.

S304: The electronic device 100 adjusts a related configuration of the display 2.

When determining that the display 2 does not meet the primary condition, the electronic device 100 may further adjust the related configuration of the display 2, so that the electronic device 100 can display the data A on the display 2.

That the electronic device 100 adjusts the related configuration of the display 2 may include one or more of the following: logging in to an account on the display 2, installing a specified application in the account logged in to on the display 2, switching the account logged in to on the display 2, and the like.

That the electronic device 100 adjusts the related configuration of the display 2 may include the following two cases:
(1) The electronic device 100 automatically adjusts the related configuration of the display 2.
   In other words, when the display 2 does not meet the primary condition, the electronic device 100 may automatically adjust the related configuration of the display 2, so that the display 2 can meet the primary condition.
(2) The electronic device 100 outputs prompt information, and adjusts the related configuration of the display 2 based on a selection of the user.

That the electronic device 100 outputs the prompt information may mean that the electronic device 100 displays the prompt information on the display 2, to prompt the user to adjust the related configuration of the display 2.

In other words, when the display 2 does not meet the primary condition, the electronic device 100 may adjust the related configuration of the display 2 based on a user operation, so that the display 2 can meet the primary condition.

For example, when the primary condition is that an account is logged in to on the display 2, and the electronic device 100 determines that no account is logged in to on the display 2, the electronic device 100 may automatically log in to an account on the display 2, or output prompt information, and log in to an account on the display 2 based on a selection (for example, a fourth operation) of the user.

For example, when the primary condition is that a specified application is installed in the account logged in to on the display 2, and the electronic device 100 determines that the specified application is not installed in the account logged in to on the display 2, the electronic device 100 may automatically install the specified application in the account, or output prompt information, and install the application in the account based on a selection (for example, a fifth operation) of the user.

For example, when the primary condition is that permission of the account logged in to on the display 2 is lower than permission of the account 1, and the electronic device 100 determines that the permission of the account logged in to on the display 2 is not lower than the permission of the account 1, the electronic device 100 may automatically switch the account logged in to on the display 2, or output prompt information, and switch the account logged in to on the display 2 based on a selection of the user.

For example, when the primary condition includes: an account is logged in to on the display 2, a specified application is installed in the account logged in to on the display 2, and permission of the account logged in to on the display 2 is lower than permission of the account 1, in this case, when determining that the display screen 2 does not meet the primary condition, the electronic device 100 may log in to or switch an account on the display 2 automatically or based on a selection of the user, and install an application in the account logged in to on the display 2.

It may be understood that step S304 is an optional step, and the electronic device 100 may not adjust a related configuration of the display 2. In this case, when determining that the display 2 does not meet the primary condition, the electronic device 100 may determine whether the display 2 meets a secondary condition.

S305: The electronic device 100 determines whether the display 2 meets the secondary condition.

When determining that the display 2 does not meet the primary condition, the electronic device 100 may determine whether the display 2 meets the secondary condition. Alternatively, after adjusting the related configuration of the display 2, the electronic device 100 may determine whether the display 2 meets the secondary condition.

When the electronic device 100 determines that the display 2 meets the secondary condition, the electronic device 100 performs step S306; otherwise, the electronic device 100 rejects to perform cross-screen sharing on the data A.

The secondary condition may be equal to the primary condition, or may be different from the primary condition.

In some implementations, when the secondary condition is equal to the primary condition, the electronic device 100 shares the data A to the display 2 for display only when the display 2 meets the primary condition.

In some other implementations, the secondary condition may not be equal to the primary condition. In this case, when the display 2 does not reach the primary condition, the electronic device 100 may further share the data A to the display 2 for display when the display 2 reaches the secondary condition. The secondary condition may be: When the display 2 does not meet the primary condition, an operation of agreeing, by the user, to display the data A on the display 2 is received. In other words, even if the display 2 does not meet the primary condition, or further, after the electronic device 100 adjusts the related configuration of the display 2, the primary condition is still not met, the electronic device 100 may display the data A on the display 2 after obtaining consent of the user. In this way, participation of the user in a cross-screen data sharing process can be enhanced.

For example, when the primary condition is that permission of the account logged in to on the display 2 is lower than permission of the account 1, if the electronic device 100 determines that the display 2 meets the secondary condition, the electronic device 100 performs step S306. In other words, when the permission of the account logged in to on the display 2 is higher than or equal to the permission of the account 1, if an operation (for example, a second operation) of agreeing, by the user, to display the data A on the display 2 is received, the electronic device 100 may also send the data A from the account 1 to the account 2, and display the data A on the display 2. Otherwise, if an operation (for example, a third operation) of rejecting, by the user, to display the data A on the display 2 is received, the electronic device 100 rejects cross-screen sharing.

Specifically, when the permission of the account logged in to on the display 2 is higher than or equal to the permission of the account 1, the electronic device 100 may output prompt information, to prompt the user whether to display the data A on the display 2. When the electronic device 100 detects that the user agrees to display the data A on the display 2, the electronic device 100 may display the data A on the display 2. In this way, even if the permission of the account logged in to on the display 2 cannot meet the requirement that the permission is lower than the permission of the account 1, the electronic device 100 can implement cross-screen sharing of the data A with permission of the user. This enhances management and control of the user on the data shared in a cross-screen manner.

For example, FIG. 7C shows prompt information 501 displayed by the electronic device 100 on the display 2 when the permission of the account 2 logged in to on the display 2 is higher than the permission of the account logged in to on the display 1. The prompt information 501 prompts the user whether to display, on the display 2, a navigation route to a destination "location C" shared from the display 1.

For example, when the primary condition is that a specified application is installed in the account logged in to on the display 2, if the electronic device 100 determines that the display 2 meets the secondary condition, the electronic device 100 performs step S306. In other words, when the specified application is not installed in the account logged in to on the display 2, if the operation of agreeing, by the user, to display the data A on the display 2 is received, the electronic device 100 may also send the data A from the account 1 to the account 2, and display the data A on the display 2.

It should be understood that the secondary condition is not limited in embodiments of this application.

S306: The electronic device 100 sends the data A to a storage space of the account 2 logged in to on the display 2, and displays the data A on the display 2.

When the electronic device 100 determines to share the data A to the display 2 for display, the electronic device 100 may send the data A to the storage space of the account logged in to on the display 2, and display the data A on the display 2.

It should be understood that, in addition to displaying the data A on the display 2, the electronic device 100 may further display content obtained based on the data A. The content may be content obtained by the electronic device 100 through further responding based on the data A, that is, content that indicates the data A. For example, when the data A is a text, the electronic device 100 may display the text on the display 2. When the data A is an image, content displayed by the electronic device 100 on the display 2 may be a thumbnail of the image. When the data A is a link, content displayed by the electronic device 100 on the display 2 may be web page content indicated by the link.

When the electronic device 100 installs, in the account 2, an application used to display the data A, the electronic device 100 may display, on the display 2 by using the application installed in the account 2, content that is provided by the application and that is obtained based on the application A. For example, the electronic device 100 may display a user interface of the application on the display 2. The user interface includes the data A or includes the content that indicates the data A.

For example, refer to FIG. 7E. The data A may be the location "location C", and the electronic device 100 may display, on the display 2, the navigation route from a current location of the electronic device 100 to the location "location C" shown in FIG. 7E.

In addition, in addition to displaying the data A on the display 2, the electronic device 100 may further output a voice prompt, vibration, and the like related to the data A.

It should be understood that when the data A is content provided by the shared application, the electronic device 100 does not need to share the data A from the storage space of the account 1 to the storage space of the account 2, and the account 2 may directly access the data A in the storage space shared by all accounts.

In conclusion, according to the cross-screen sharing method provided in embodiments of this application, when an electronic device needs to perform cross-screen data sharing, whether cross-screen data sharing is performed or whether user authorization is required to complete cross-screen data sharing can be determined based on related information of an account logged in to on a display, for example, permission of the account and an application installed in the account. In this way, the electronic device can implement cross-screen data sharing only when a preset condition is met. This enhances management and control of data shared in a cross-screen manner by the electronic device.

It should be understood that the steps in the foregoing method embodiments may be completed by using an integrated logic circuit of hardware in a processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in a memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform the method performed by the electronic device 100 in any one of the foregoing embodiments.

This application further provides a computer-readable storage medium. The computer-readable storage medium stores a computer program (which may also be referred to as code or instructions). When the computer program is run, a computer is enabled to perform the method performed by the electronic device 100 in any one of the foregoing embodiments.

It should be noted that the processor in embodiments of this application may be an integrated circuit chip, and has a signal processing capability. In an implementation process, steps in the foregoing method embodiments may be completed by using an integrated logic circuit of hardware in a processor or instructions in a form of software. The foregoing processor may be a general purpose processor, a digital signal processor (digital signal processor, DSP), an application-specific integrated circuit (Application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed by a hardware decoding processor, or may be performed through a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the methods in the foregoing method embodiments.

The apparatus, the computer-readable storage medium, the computer program product, or the chip provided in embodiments of this application are all configured to perform the corresponding methods provided above. Therefore, for beneficial effect that can be achieved, refer to beneficial effect in the corresponding methods provided above, and details are not described herein again.

The implementations of this application may be randomly combined to achieve different technical effect.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A person of ordinary skill in the art may understand that all or some of the procedures of the methods in embodiments may be implemented by a computer program instructing relevant hardware. The program may be stored in a computer-readable storage medium. When the program is run, the procedures of the methods in embodiments are performed. The foregoing storage medium includes any medium that can store program code, like a ROM or a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A cross-screen sharing method, wherein the method is applied to an electronic device comprising a first display and a second display, and the method comprises:
logging in to, by the electronic device, a first account on the first display;
displaying, by the electronic device, first content or indication information of the first content on the first display;
detecting, by the electronic device, a first operation of sharing the first content to the second display, wherein a second account is logged in to on the second display; and
when permission of the first account is higher than permission of the second account, displaying, by the electronic device on the second display, the first content or second content obtained based on the first content.

2. The method according to claim 1, wherein when the permission of the first account is lower than or equal to the permission of the second account, the method further comprises:
rejecting, by the electronic device, to respond to the first operation;
or
outputting, by the electronic device, first prompt information, wherein the first prompt information prompts a user to share the first content to the second display; and when receiving a second operation of agreeing to share, displaying, by the electronic device on the second display, the first content or the second content obtained based on the first content, or when receiving a third operation of rejecting to share, rejecting, by the electronic device, to respond to the first operation.

3. The method according to claim 1 or 2, wherein before the detecting, by the electronic device, a first operation of sharing the first content to the second display, no account is logged in to on the second display, and after the detecting, by the electronic device, a first operation of sharing the first content to the second display, the method further comprises:
automatically logging in to, by the electronic device, the second account on the second display, or when receiving a fourth operation, logging in to, by the electronic device, the second account on the second display.

4. The method according to any one of claims 1 to 3, wherein the first operation comprises a user operation performed on an option that is displayed on the first display and that indicates the second display.

5. The method according to any one of claims 1 to 4, wherein the first account corresponds to a first storage space in the electronic device, the second account corresponds to a second storage space in the electronic device, and the first storage space and the second storage space are isolated from each other.

6. The method according to claim 5, wherein before the electronic device displays the first content or the second content on the second display, the first content is located in the first storage space, and before the displaying, by the electronic device on the second display, second content obtained based on the first content, the method further comprises:
sending, by the electronic device, the first content to the second storage space.

7. The method according to any one of claims 1 to 6, wherein the first content is provided by a first application; and
the displaying, by the electronic device on the second display, the first content or the second content specifically comprises:
displaying, by the electronic device on the second display, the first content or the second content that are provided by a second application, wherein the second application and the first application are a same application or applications of a same type.

8. The method according to claim 7, wherein before the displaying, by the electronic device on the second display, the first content or the second content that are provided by a second application, the method further comprises:
automatically installing, by the electronic device, the second application in the storage space of the second account; or when receiving a fifth operation, installing, by the electronic device, the second application in the storage space of the second account.

9. The method according to any one of claims 1 to 8, wherein the first content and the second content are located in a third storage space shared by the first account and the second account.

10. The method according to claim 9, wherein both the first content and the second content are provided by a shared application installed in the third storage space.

11. The method according to any one of claims 1 to 10, wherein the first content comprises one or more of the following: a text, an image, a video, an audio, a link, a file, and a table.

12. The method according to any one of claims 1 to 11, wherein the electronic device comprises one system-on-a-chip, and running of storage spaces corresponding to a plurality of accounts is supported by the system-on-a-chip.

13. An electronic device, comprising a plurality of displays, a memory, one or more processors, and one or more programs, wherein when the one or more processors execute the one or more programs, the electronic device is enabled to implement the method according to any one of claims 1 to 12.

14. A computer-readable storage medium, comprising instructions, wherein when the instructions are run on an electronic device, the electronic device is enabled to perform the method according to any one of claims 1 to 12.

15. A computer program product, wherein when the computer program product runs on a computer, the computer is enabled to perform the method according to any one of claims 1 to 12.
